(19) Europäisches Patentamt
European Patent Office
Office européen des brevets

(11) **EP 3 885 685 B1**

(12) **EUROPEAN PATENT SPECIFICATION**

(45) Date of publication and mention
of the grant of the patent:
**05.07.2023 Bulletin 2023/27**

(21) Application number: **21163811.9**

(22) Date of filing: **19.03.2021**

(51) International Patent Classification (IPC):
**F27B 9/24** *(2006.01)*   **C04B 35/185** *(2006.01)*
**F27D 3/02** *(2006.01)*   **B32B 18/00** *(2006.01)*
**C04B 35/488** *(2006.01)*   **C04B 35/626** *(2006.01)*
**C04B 41/00** *(2006.01)*   **C04B 41/50** *(2006.01)*
**C04B 41/87** *(2006.01)*   **F27D 3/00** *(2006.01)*

(52) Cooperative Patent Classification (CPC):
(C-Sets available)
**C04B 35/488; B32B 18/00; C04B 35/185;**
**C04B 35/4885; C04B 35/62625; C04B 41/009;**
**C04B 41/5037; C04B 41/87; F27B 9/2415;**
**F27B 9/2469; F27D 3/026;** C04B 2235/3217;
C04B 2235/3232; C04B 2235/3248;
C04B 2235/3463;                          (Cont.)

(54) **ROLLER FOR CERAMIC SLAB KILNS AND METHOD OF MAKING SUCH A ROLLER**

ROLLE FÜR KERAMIKFLIESENBRENNÖFEN UND VERFAHREN ZUR HERSTELLUNG EINER SOLCHEN ROLLE

ROULEAU POUR FOUR DE PLAQUES EN CÉRAMIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**TN**

(30) Priority: **24.03.2020 IT 202000006169**

(43) Date of publication of application:
**29.09.2021 Bulletin 2021/39**

(73) Proprietor: **Keratech S.p.A.**
**34076 Romans d'Isonzo, Gorizia (IT)**

(72) Inventor: **ROSMANIT, Paolo**
**I-34076 Romans d'Isonzo, GORIZIA (IT)**

(74) Representative: **Zanettin, Gianluigi**
**Jacobacci & Partners S.p.A.**
**Piazza Mario Saggin, 2**
**35131 Padova (IT)**

(56) References cited:
**CN-A- 102 649 991     DE-A1-102011 051 270**

EP 3 885 685 B1

(52) Cooperative Patent Classification (CPC): (Cont.)
C04B 2235/36; C04B 2235/5436; C04B 2235/5445;
C04B 2235/5463; C04B 2235/77; C04B 2235/80;
C04B 2235/94; C04B 2235/9607; C04B 2235/9669;
C04B 2237/341; C04B 2237/348; C04B 2237/84;
F27D 2003/0043

C-Sets
**C04B 41/009, C04B 35/10, C04B 35/185,
C04B 35/48;
C04B 41/5037, C04B 41/4539, C04B 41/455,
C04B 41/5031, C04B 41/5041, C04B 41/5042**

**Description**

Field of application

The present invention relates to a roller for ceramic slab kilns and a method of making such a roller.
Advantageously, the roller according to the invention is adapted to be used in continuous gas kilns for firing ceramic tiles.

Background art

As is known, the firing process of a ceramic slab is the most important step of the production thereof, as the crystalline transformations which give the final slab the specific properties thereof occur during such a process. The firing consists in transferring heat (energy) to the dried body, so that, after the sintering process, it obtains all the desired final features.
The firing of the ceramic slabs occurs through the use of appropriate continuous gas kilns and is essentially aimed at performing a sintering cycle.
Inside such kilns, the ceramic slabs are made to slide while resting on a roller moving system. The rollers are made of various types of refractory materials and have the function of supporting and sliding the ceramic plates inside the kiln, transporting the ceramic piece from the inlet mouth of the kiln to the outlet mouth thereof.

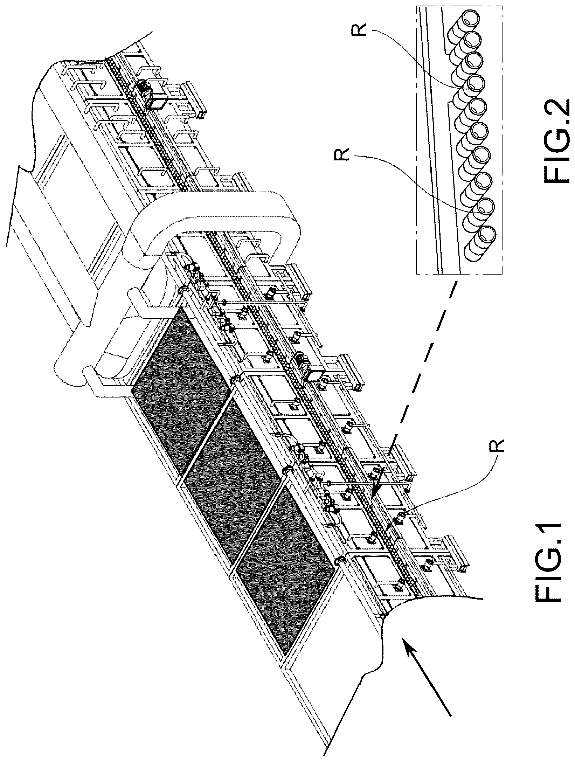

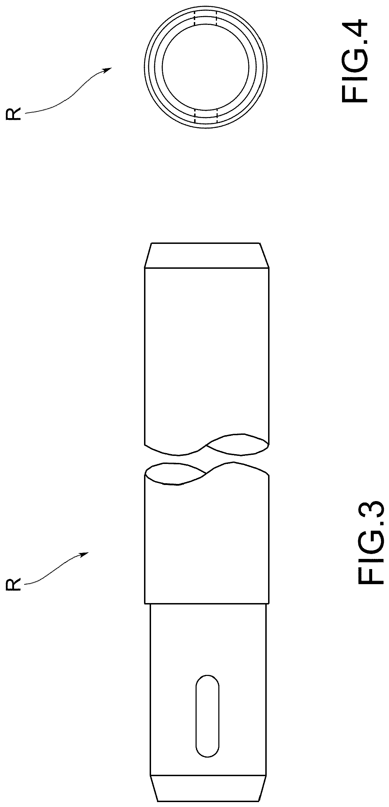

Figure 1 shows a portion of a continuous ceramic slab kiln, provided with movement rollers R protruding with respect to the firing tunnel. Figure 2 shows a detail of a continuous kiln, with the ends of the rollers highlighted. Figures 3, 4, 5 and 6 show some examples of rollers for ceramic plate kilns.
Each kiln is divided into sectors or zones, characterized by different temperatures, for the performance of different steps in the firing process.
Generally, a kiln is divided into the following sectors or zones:

- preheating zone;
- firing zone;
- rapid cooling zone;
- slow cooling zone.

In the interval between the preheating step and the first firing step (680 - 1180°C), alkaline-type aggressions occur to the detriment of the refractory rollers. These aggressions develop due to the high amounts of sodium and potassium-based elements (in particular sodium oxide ($Na_2O$) and potassium sulfate ($K_2SO_4$), which are present in the form of molten salts and derive from the slurries which form the ceramic plates. The latter, by direct contact with the refractory roller (sliding thereover), allow the corrosive elements to penetrate through the crystalline matrix of the refractory roller.
As reported in a study conducted by Nathan S. Jacobs et al. [1], the penetration speed of the polluting sludge can be quantified through Poiseuille's law:

$$l^2 = \left(\frac{r\cos\theta}{2}\right)\left(\frac{\gamma}{\eta}\right)t$$

Where r is defined as the radius of the open pore, l is the sludge penetration depth, $\eta$ is the sludge viscosity, Y is the sludge surface tension and $\theta$ is the contact angle.
As seen in the mathematical equation, the sludge penetration depth is directly proportional to the temperature, to the radius of the open pore and is inversely proportional to the sludge viscosity. It follows that in refractory rollers the aggression strongly depends on some of the physical features thereof, such as density, porosity, water absorption and crystalline composition.
The refractory materials can be divided according to Lewis's acid-base theory into three types:

- acid refractory materials: for example mullite, silica, zirconium silicate, etc.;
- neutral refractory materials: for example zirconia, corundum, chromium oxide, etc.;
- basic refractory materials: for example magnesia, dolomite, forsterite, etc.

Generally, the refractory rollers used in kilns as supports for the ceramic plates mainly consist of mullite ($3Al_2O_3 \ 2SiO_2$). These are therefore rollers of acid refractory materials.

In the aforementioned study conducted by Nathan S. Jacobs et al. [1], evidence is given of the following reactions in the mullite crystal lattice:

$$3Al_2O_3 \cdot 2SiO_2 \text{ (s)} + Na_2O\text{(s)} \rightarrow Na_2O \cdot Al_2O_3 \cdot 2SiO_2(l) + 2Al_2O_3\text{(s)}$$

$$3Al_2O_3 \cdot 2SiO_2 \text{ (s)} + 3K_2SO_4\text{(s)} + 10SiO_2 \text{ (s)} \rightarrow 6KAlSi_2O_6(l) + 3SO_3$$

By analyzing these reactions, it can be seen how mullite (3Al2O3 2SiO2) reacts with the aforementioned melting elements released by ceramic plates during firing, such as sodium oxide (Na2O) and potassium sulfate (K2SO4) (basic compounds). The reactions mainly occur on the surface of the refractory body and at the pore level of the roller, leading to the formation of different crystalline phases, such as nepheline (Na2O Al2O3 2SiO2) and leucite (KAlSi2O6).

The new phases which are created within the mullite crystal lattice of the refractory roller possess different physical properties from the basic mullite crystal lattice. Of these physical properties, the most important is the thermal expansion coefficient.

When the roller is subjected to drastic temperature variations (for example during the shutdown of the kiln for the maintenance thereof, or during the extraction of the roller for the cleaning thereof), the different thermal expansion coefficient pushes the atoms of the newly formed crystalline phases to move differently than the atoms forming the mullite crystal lattice of the roller, causing traction and compression phenomena which lead to the formation and propagation of cracks and, finally, to the breakage of the roller itself.

In the past, starting from the assumption that the presence of porosity allows the infiltration of melting elements inside the mullite crystal lattice of the roller, an attempt was made to prevent the penetration of foreign chemical elements, working on the composition of the refractory material in order to reduce the porosity thereof. However, the results were partial, with porosity reduced to 16% and the water absorption rate to 5%. However, such results did not allow to significantly reduce the corrosive phenomena described above.

In the reference technical field, such as disclosed in patent documents DE 10 2011 051270 A1 or CN 102 649 991 A, disclosing a roller for ceramic slab kilns being made of refractory material and having a protective coating, there is therefore still a strong need to have refractory rollers which are significantly less prone to infiltrations of foreign elements in the mullite crystal lattice during the use thereof in continuous ceramic slab kilns, so as to prevent the penetration of melting elements released by the ceramic plates during firing and the formation of new phases within the crystalline mullite matrix and, therefore, reduce the risk of destructive phenomena being triggered following operating temperature variations.

Overview of the invention

Therefore, it is the object of the present invention to eliminate, or at least significantly reduce, the aforementioned problems related to the prior art, by providing a roller for ceramic slab kilns which is significantly less prone to infiltrations of foreign elements during the use thereof in continuous ceramic slab kilns.

It is a further object of the present invention to provide a roller for ceramic slab kilns which is cost-effective to produce.

Description of the drawings

The technical features of the invention may be clearly found in the contents of the claims presented below and the advantages thereof will become more apparent from the following detailed description, made with reference to the accompanying drawings, which show one or more embodiments thereof, merely given by way of non-limiting examples, in which:

- Figure 1 shows a portion of a continuous ceramic slab kiln, provided with movement rollers R protruding with respect to the firing tunnel;
- Figure 2 shows a photograph of a detail of a continuous kiln, with the ends of the rollers highlighted;
- Figure 3 shows an orthogonal view of a roller for traditional ceramic slab kilns with cylindrical section in the direction of the extension thereof in length;
- Figure 4 shows an orthogonal view of the roller in Figure 3 in the axial direction;
- Figure 5 shows a photograph of a traditional roller with a ribbed outer surface;
- Figure 6 shows a photograph of a traditional roller of tapered shape with a swollen central portion;
- Figure 7 shows a diagrammatic cross-sectional view of a roller according to the invention, in which the protective coating has been shown out of proportion for the purposes of graphic representation;
- Figures 8, 9 and 10 show the photographs of samples of rollers coated according to the invention and uncoated at the end of a strong aggression test;

- Figure 11 shows an enlarged detail of Figure 8;
- Figures 12, 13, 14 and 15 show photographs of samples of rollers coated according to the invention and uncoated at the end of a weak aggression test;
- Figure 16 shows a diagrammatic depiction of the analysis performed by the scanning electron microscopy (SEM) technique on the samples of rollers coated according to the invention and uncoated at the end of the weak aggression tests;
- Figures 17 and 18 show the results of the analysis by scanning electron microscopy (SEM) (with 1mm resolution) conducted respectively on the first two millimeters and the second two millimeters from the outer surface of a sample no. 1 of a roller piece coated according to the invention;
- Figures 19 and 20 show the results of the analysis by scanning electron microscopy (SEM) (with 1mm resolution) conducted respectively on the first two millimeters and the second two millimeters from the outer surface of a sample no. 2 of a roller piece coated according to the invention;
- Figures 21 and 22 show the results of the SEM analysis (with 1mm resolution) conducted respectively on the first two millimeters and the second two millimeters from the outer surface of a sample no. 3 of a roller piece coated according to the invention;
- Figure 23 shows the results of the SEM analysis (with $600\mu m$ resolution) conducted on the first 0.730mm (730 micrometers) from the outer surface of sample no. 3 of a roller piece coated according to the invention;
- Figures 24 and 25 show the results of the SEM analysis (with 1mm resolution) conducted respectively on the first two millimeters and the second two millimeters from the outer surface of a sample no. 4 of a roller piece coated according to the invention;
- Figures 26 and 27 show the results of the SEM analysis (with 1mm resolution) conducted respectively on the first two millimeters and the second two millimeters from the outer surface of a sample of an uncoated roller piece;
- Figure 28 shows the graphs of the sodium oxide content as a function of the distance from the outer surface in four samples of rollers coated according to the invention;
- Figure 29 shows the graphs of the sodium oxide content as a function of the distance from the outer surface in two of the four samples of rollers coated according to the invention in Figure 28 and in an uncoated roller;
- Figure 30 shows the results of the SEM analysis (with a resolution of 1mm) conducted on the first two millimeters from the outer surface of a sample of an uncoated roller piece used for 8 months in a ceramic tile kiln.

Elements or parts in common to the embodiments described will be indicated hereafter using the same reference numerals.

Detailed description

With reference to the aforesaid Figures, the reference numeral 1 indicates as a whole a roller for ceramic slab kilns according to the invention.

The term "ceramic slab" is intended to generally include any slab-like body made of ceramic material, regardless of the size thereof. Therefore, both small or medium-sized tiles and large slabs are included.

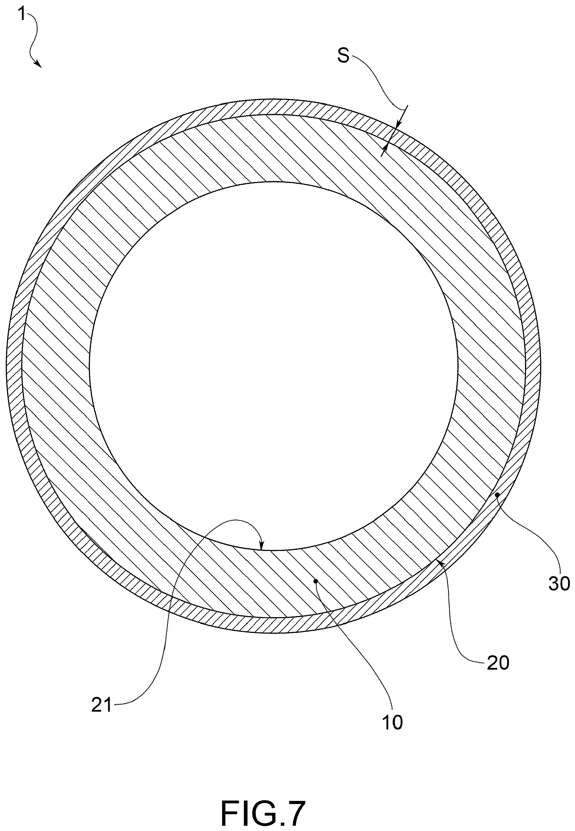

According to a general embodiment of the invention, shown in particular in Figure 7, the roller 1 for ceramic slab kilns comprises a roller body 10, having an outer surface 20 which in use is intended to come into contact with ceramic slabs.

In particular, the roller body 10 is an axially elongated body along a longitudinal extension direction.

Preferably, the roller body 10 is axially hollow, as shown in Figure 7. In other words, the roller body 10 has a tubular shape. In such a case, on the roller body 10 it is possible to identify not only an outer surface 20, which in use is intended to come into contact with ceramic slabs, but also an inner surface 21, which in use is not intended to come into contact with the ceramic slabs.

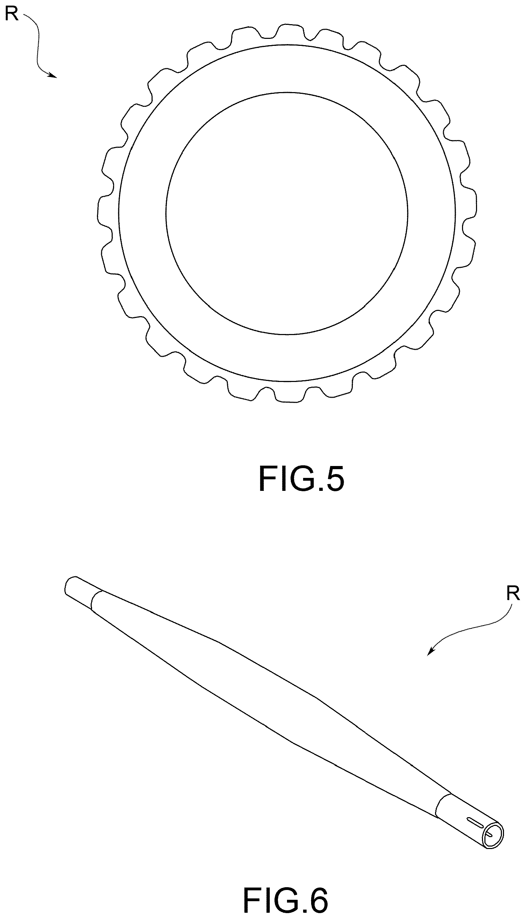

Preferably, the roller body has an essentially circular cross section. The cross section can be constant along the axial extension of the roller, or it can vary axially, as shown for example in Figures 3 and 6.

The shape of the roller body 10 can therefore vary according to the handling requirements of the ceramic slabs which the roller must satisfy inside the kiln.

The outer surface 20 of the roller body 10 can be smooth or can be corrugated, in a regular or irregular manner. In particular, the outer surface 20 of the roller body 10 can have longitudinal grooves distributed circumferentially so as to form an axially ribbed surface, such as that shown in Figure 5.

The aforesaid roller body 10 is made of a first refractory material having a mullite ($3Al_2O_3 \cdot 2SiO_2$) content by weight not lower than 40%.

The term "refractory material" refers to a ceramic product which has the ability to withstand high temperatures (above 1580°C) while remaining unaltered and without showing melting or deformation phenomena.

Preferably, the aforesaid first refractory material of which the roller body 10 is made comprises from 40% to 90% by weight of mullite.

In particular, the first refractory material of which the roller body is made can consist of:

- from 40% to 90% by weight of mullite,
- from 10% to 50% by weight of corundum,
- from 0% to 10% by weight of zirconia; and
- from 0% to 7% of amorphous silica.

In an unclaimed embodiment, the roller body 10 in the aforesaid first refractory material has been obtained by sintering, preferably at temperatures between 1500°C and 1650°C and for a period of time not less than 90 min, a roller body obtained by forming and then drying a slurry of powders of predefined components in terms of composition and amount.

According to the invention, as diagrammatically shown in Figure 7, the roller 1 comprises a protective coating 30, which covers the roller body 10 at least at the outer surface 20.

The aforesaid protective coating 30 is made of a second refractory material having a zirconia content of not less than 15% by weight and an average thickness of not less than $45\mu$m.

It has surprisingly been found that a roller 1 made according to the present invention is significantly less prone to infiltrations of foreign elements in the mullite crystal lattice, in particular of alkali.

As will be described in more detail later in the description, a series of experimental tests have been carried out, adapted in particular to simulate the chemical aggression which can occur inside continuous ceramic slab kilns. Such tests were conducted on samples of rollers coated according to the invention and on samples of uncoated rollers. The various samples were subjected to analysis with the scanning electron microscopy (SEM) technique in order to assess the degree of penetration of the pollutants, based on the concentrations of some reaction products directly referable to the aggression actions. Similar analyses were conducted on samples of uncoated rollers, used for several months in a ceramic slab kiln.

From the comparison of such data, it emerged that the rollers coated according to the invention are significantly less prone to infiltrations of foreign elements in the mullite crystal lattice, in particular they are less prone to alkali infiltrations.

The rollers coated according to the invention therefore have features such as to make them suitable for use in continuous ceramic slab kilns, being capable of preventing the penetration of melting elements released by the ceramic plates during firing and the formation of new phases inside the crystalline mullite matrix and, therefore, reduce the risk of destructive phenomena occurring as a result of operating temperature variations.

Advantageously, the aforesaid second refractory material has a zirconia content not exceeding 60% by weight, since if a higher percentage were to be obtained, this would entail an excessive cost of the raw materials and of the related thermal manufacturing process.

Preferably, the aforesaid second refractory material has a zirconia content between 15% and 45% by weight, and even more preferably between 19% and 42% by weight.

In said second refractory material, zirconia can be present in one or more different crystalline phases.

In particular, the aforesaid second refractory material of which the protective coating 30 is made can consist of:

- from 15% to 45% by weight of zirconia;
- from 5% to 40% by weight of corundum;
- from 15% to 75% by weight of mullite;
- from 0 to 10% by weight of titanium dioxide and/or zirconium titanate; and
- the remainder by amorphous silica.

According to a first unclaimed embodiment, the aforesaid second refractory material of which the protective coating 30 is made consists of:

- 27% by weight of zirconia;
- 20% by weight of corundum;
- 52% by weight of mullite;
- 1% by amorphous silica.

According to a second unclaimed embodiment, the aforesaid second refractory material of which the protective coating 30 is made consists of:

- 42% by weight of zirconia;
- 12% by weight of corundum;
- 45% by weight of mullite;
- 1% by amorphous silica.

According to an unclaimed alternative embodiment, the aforesaid second refractory material of which the protective coating 30 is made consists of:

- 33% by weight of zirconia;
- 39% by weight of corundum;
- 18% by weight of mullite;
- 9% by weight of titanium dioxide and/or zirconium titanate;
- 1% by amorphous silica.

According to a further unclaimed alternative embodiment, the aforesaid second refractory material of which the protective coating 30 is made consists of:

- 19% by weight of zirconia;
- 8% by weight of corundum;
- 72% by weight of mullite;
- 1% by amorphous silica.

Preferably, as will be resumed below describing the method according to the present invention, the aforesaid protective coating 30 has been obtained by depositing on the roller body 10, preferably by cold spraying, a layer of a slurry comprising powdered alumina and powdered zirconium silicate. As already highlighted above, the roller body in the aforesaid first refractory material has been obtained by sintering a roller body obtained by forming and then drying a slurry of powders of predefined components in terms of composition and amount.

The roller body (made of the first refractory material) with said layer of slurry was then heat treated, preferably at temperatures between 1500°C and 1650°C and for a period of time not less than 90 min, so as to sinter the alumina and the zirconium silicate of said slurry in mullite and zirconia according to the reaction

$$2ZrSiO_4 + 3Al_2O_3 \rightarrow 2ZrO_2 + 3Al_2O_3 \cdot 2SiO_2$$

thus obtaining from said layer of slurry said surface coating made of said second refractory material.

Preferably, the average thickness s of said protective coating 30 is not more than 250um. More preferably, the average thickness s of said protective coating 30 is between 45 and 200um, and even more preferably is between 100 and 200pm.

The present invention also relates to a method of making a roller for ceramic slab kilns.

In particular, such a method according to the invention is adapted to make a roller according to the present invention, and in particular as described above.

The method according to the invention comprises an operating step a) of making a roller body 10 of a first refractory material having a mullite content of not less than 40% by weight.

The aforesaid roller body 10 has an outer surface 20 which in use is intended to come into contact with the ceramic slabs.

In particular, the aforesaid step a) of making a roller body of a first refractory material includes sintering, preferably at temperatures between 1500°C and 1650°C and for a period of time not less than 90 minutes, a roller body previously obtained by forming and then drying a slurry of powders of predefined components - in terms of composition and amount.

Preferably, the aforesaid powders of components are chosen - in terms of composition and amount - to obtain a refractory material at the end of sintering consisting of:

- from 40% to 90% by weight of mullite,
- from 10% to 50% by weight of corundum,
- from 0% to 10% by weight of zirconia; and
- from 0% to 7% of amorphous silica.

Even more preferably, the aforesaid powders of components are chosen - in terms of composition and amount - to obtain a refractory material at the end of sintering consisting of:

- from 50% to 75% by weight of mullite,
- from 20% to 40% by weight of corundum,
- from 5% to 8% by weight of zirconia; and
- from 0% to 3% of amorphous silica.

According to the invention, the method comprises an operating step b) of making on said roller body 10 - at least at the outer surface 20 thereof - a protective coating 30 made of a second refractory material having a zirconia content of not less than 15% by weight and an average thickness s of not less than 45μm.

Advantageously, the aforesaid second refractory material has a zirconia content not exceeding 60% by weight.

Preferably, the aforesaid second refractory material has a zirconia content between 15% and 45% by weight, and even more preferably between 19% and 42% by weight.

The zirconia in said second refractory material can be present in one or more different crystalline phases.

In particular, the aforesaid second refractory material of which the protective coating 30 is made consists of:

- from 15% to 45% by weight of zirconia;
- from 5% to 40% by weight of corundum;
- from 15% to 75% by weight of mullite;
- from 0 to 10% by weight of titanium dioxide; and
- the remainder by amorphous silica.

Preferably, the average thickness s of said protective coating 30 is not more than 250μm. More preferably, the average thickness s of said protective coating 30 is between 45 and 200um, and even more preferably is between 100 and 200pm.

Step b) of making said protective coating can be carried out following essentially two methods:

- first method: directly depositing zirconia on the roller body; or
- second method: forming zirconia on the roller body from the thermal dissociation of zirconium silicate previously deposited on the roller body.

More in detail, the first method includes depositing on the roller body a layer of material comprising powdered zirconia and then heat treating such a layer in order to densify it. The percentage by weight of zirconia in the protective coating thus obtained is defined based on the initial amount of zirconia and the presence of any other components.

The second method instead includes depositing on the roller body a layer of material comprising powdered zirconium silicate and then heat treating such a layer in order to cause the dissociation of the zirconium silicate into zirconia and amorphous silica.

Zirconium silicate (ZrSiO4, zircon) is a very chemically stable compound. At high temperatures it decomposes into ZrO2 (zirconia) and SiO2 (silica), as described in the reaction below:

$$ZrSiO_4 \rightarrow ZrO_2 + SiO_2$$

The decomposition of zirconium silicate (ZrSiO4) begins at around 1673°C, but can nevertheless begin at significantly lower temperatures (even at 1,400°C) as the particle size of the raw materials and the nature thereof and, moreover, the amount of impurities inside the powders, affect the dissociation temperature and the decomposition rate of the zirconium silicate, reducing the dissociation temperature in the range between 1450 - 1600°C.

The percentage by weight of zirconia in the protective coating thus obtained is defined based on the initial amount of zirconium silicate.

The second method of forming the protective coating is preferred over the first method essentially for cost reasons, essentially linked to the fact that zirconium silicate has a significantly lower cost than that of zirconia and the heat treatment required in the second method can be conducted at lower temperatures.

According to a preferred embodiment of the method, the aforesaid operating step b) of making the protective coating includes:

- depositing at least on the outer surface 20 of said roller body 10 a layer of a slurry comprising at least powdered zirconium silicate; and
- heat treating the roller body with said layer of slurry to decompose the zirconium silicate of said slurry and obtain zirconia, thus obtaining from said layer of slurry the surface coating made of the second refractory material.

Preferably, the slurry is deposited on the roller body 10 by cold spraying.

As already highlighted above, the thermal dissociation of zircon silicate leads to the formation of amorphous silica as well as zirconia. The presence of amorphous silica in the protective coating is not particularly welcome, as it lowers the resistance features thereof to heat and chemical aggression. It is therefore preferable to eliminate, or at least significantly reduce, the amorphous silica content in the protective coating.

According to a particularly preferred embodiment, the aforesaid slurry also comprises powdered alumina in addition to the zirconium silicate. The roller body with the layer of slurry also comprising powdered alumina is heat treated so as to sinter the alumina and zirconium silicate of said slurry into mullite and zirconia according to the reaction

$$2ZrSiO_4 + 3Al_2O_3 \rightarrow 2ZrO_2 + 3Al_2O_3 \cdot 2SiO_2$$

thus obtaining from said layer of slurry the surface coating made of the second refractory material.

In accordance with such a particularly preferred embodiment, the powdered alumina ($Al2O3$) present in the slurry then combines with the amorphous silica ($SiO2$) which is generated by the dissociation of the zirconium silicate, leading to the formation of mullite according to the following reaction:

$$3Al_2O_3 + 2SiO_2 \rightarrow 3Al_2O_3 \cdot 2SiO_2$$

Thereby, the amorphous silica is replaced by mullite, which has superior features of resistance to heat and chemical aggression.

The alumina which does not react during the sintering cycle to create mullite remains present in the crystalline form of corundum.

Preferably, the roller body with the layer of slurry comprising powdered zirconium silicate and alumina is heat treated at temperatures between 1500°C and 1650°C, preferably of 1600°C, for a period of time not less than 90 min.

Preferably the powdered zirconium silicate has particle size D50 between 0.5 and 10.0pm, and even more preferably between 0.5 and 2.0µm. It has been experimentally verified that an increase in the specific surface (linked to a reduction in the particle size of the zirconium silicate particles) allows the dissociation temperature of the zirconium silicate to be lowered, thus favoring the sintering process of zirconium silicate and alumina in zirconia and mullite.

Advantageously, calcined alumina or reactive alumina, and possibly a mixture of the two types of alumina, can be used as alumina in the aforesaid slurry. Preferably, the alumina ($Al2O3$) has a purity of not less than 99% by weight. Preferably reactive alumina is used, as it has a finer particle size than calcined alumina, being micronized.

The slurry can consist only of zirconium silicate and alumina, or it can also contain other additives, as will be specified below.

If the slurry contains only zirconium silicate and alumina, it is preferable to respect the molar ratio between the two compounds defined by the sintering reaction: 3 moles of alumina are added for every 2 moles of zirconium silicate. Preferably, the solid phase of the slurry therefore consists of 45.5% by weight of (calcined and/or reactive) alumina and 54.5% by weight of zirconium silicate.

However, the content of alumina and zirconium silicate may not respect this ratio. The solid phase of the slurry can consist of 40.0% to 60.0% by weight of (calcined and/or reactive) alumina and the remainder of zirconium silicate.

According to a first particular embodiment of the method according to the invention, the solid phase of said slurry consists of:

- 40% to 60% by weight of powdered calcined alumina, preferably 45.5% by weight,
- 40% to 60% by weight of powdered zirconium silicate, preferably 54.5% by weight.

Preferably the calcined alumina has particle size D50 between 1.0 and 7.0µm, and even more preferably between 5.0 and 7.0µm, while the zirconium silicate has particle size D50 between 0.5 and 10.0pm, and even more preferably between 0.5 and 2.0µm.

Preferably, the second refractory material obtained consists of:

- 27% by weight of zirconia;
- 20% by weight of corundum;
- 52% by weight of mullite;
- 1% by amorphous silica.

According to a second particular embodiment of the method according to the invention, the solid phase of said slurry consists of:

- 40% to 60% by weight of powdered reactive alumina, preferably 45.5% by weight; and

- 40% to 60% by weight of powdered zirconium silicate, preferably 54.5% by weight.

Preferably, the reactive alumina has particle size D50 between 0.1 and 1.0$\mu$m, while the zirconium silicate has particle size D50 between 0.5 and 10.0pm, and even more preferably between 0.5 and 2.0$\mu$m.

Preferably, the second refractory material obtained consists of:

- 42% by weight of zirconia;
- 12% by weight of corundum;
- 45% by weight of mullite;
- 1% by amorphous silica.

As already mentioned, in addition to the zirconium silicate and alumina, the slurry can contain additives, in particular adapted to promote the sintering process of zirconium silicate and alumina into mullite and zirconia.

Advantageously, the additives can comprise titanium dioxide (TiO2) and/or andalusite (3(Al2O3 SiO2) .

More in detail, it has been found that the addition of titanium dioxide (TiO2) as a fluxing agent leads to a greater degree of sintering of mullite at maximum temperatures below 1600°C. In particular, it has been seen that as the percentage by weight of TiO2 increases, the amount of mullite inside the ceramic body increases.

According to the scientific article Chandra, G.C. Das, U. Sengupta, S. Maitra, Studies on the reaction sintered zirconia-mullite-alumina composites with titania as additive, Ceramica 59 (2013) 487- 494, titanium dioxide reacts with zirconium silicate and alumina to create mullite and zirconium titanate (ZrTiO4) according to the reaction:

$$2ZrSiO_4 + 4Al_2O_3 + TiO_2 \rightarrow ZrO_2 + 3Al_2O_3 \cdot 2SiO_2 + ZrTiO_4 + Al_2O_3$$

Titanium dioxide may be present in the refractory material obtained, as the above reaction may not be complete.

According to a third particular embodiment of the method according to the invention, the solid phase of said slurry consists of:

- 39% to 60% by weight of powdered reactive alumina, preferably 48.0% by weight;
- 39% to 60% by weight of powdered zirconium silicate, preferably 43.0%; and
- 0.1% to 10% by weight of powdered titanium dioxide, preferably 9.0%.

Preferably the reactive alumina has particle size D50 between 0.1 and 1.0pm; the zirconium silicate has particle size D50 between 0.5 and 10.0pm, and even more preferably between 0.5 and 2.0$\mu$m; the titanium dioxide has particle size D50 between 0.1 and 10.0pm, and even more preferably between 0.3 and 0.6$\mu$m.

Preferably, the second refractory material obtained consists of:

- 33% by weight of zirconia;
- 39% by weight of corundum;
- 18% by weight of mullite;
- 9% by weight of titanium dioxide and/or zirconium titanate;
- 1% by amorphous silica.

Regarding the addition of andalusite, it was found that andalusite has advantageous effects in the sintering process, as its presence promotes the decomposition of zirconium silicate (ZrSiO4) at temperatures below 1600°C. In the temperature range between 1300°C and 1600°C, andalusite transforms into mullite and the glass phase (amorphous silica) according to the following reaction.

$$3(Al_2O_3 \cdot SiO_2) \rightarrow 3Al_2O_3 \cdot 2SiO_2 + SiO_2$$

The glass phase has some impurities therein. In most cases, these impurities consist of potassium oxide (K2O) and iron oxides (Fe2O3, etc.) and other elements. These impurities cause the amorphous glass phase (SiO2) to have a lower than normal melting temperature. This leads to a dissociation of the zirconium silicate at a temperature below 1600°C.

According to a fourth particular embodiment of the method according to the invention, the solid phase of said slurry consists of:

- 35% to 45% by weight of powdered reactive alumina, preferably 39.25% by weight;
- 25% to 35% by weight of powdered zirconium silicate, preferably 32.25% by weight; and

- from 20% to 30% by weight of powdered andalusite, preferably 28.5% by weight.

Preferably, the andalusite has a content of impurities, in particular consisting of potassium oxide, sodium oxide and iron oxide, not exceeding 2% by weight.

Preferably the reactive alumina has particle size D50 between 0.1 and 1.0pm; the zirconium silicate has particle size D50 between 0.5 and 10.0pm, and even more preferably between 0.5 and 2.0$\mu$m; andalusite has particle size D50 between 1.0 and 10$\mu$m, and even more preferably between 4.0 and 7.0$\mu$m.

Preferably, the second refractory material obtained consists of:

- 19% by weight of zirconia;
- 8% by weight of corundum;
- 72% by weight of mullite;
- 1% by amorphous silica.

In an unclaimed embodiment, the slurry consists of powders (dry powder mixture) and water in a 1:1 weight ratio. The amount of dry powders is added in the same amount by weight of water (example: 1500 g of dry powders in 1500 ml of water, plus any deflocculating agent).

APPLICATION EXAMPLES

Below are some application examples of manufacturing.

Making the roller body

In all the examples, a portion of a technical roller made of refractory material produced by KeraTech SpA was used as the roller body, the mineralogical composition and main properties of which are reported respectively in Table 1 and Table 2.

Table 1

| Mullite | 62% |
|---|---|
| Corundum | 30% |
| Zirconia | 6% |
| Glass phase | 2% |

Table 2

| Apparent density (g/cm$^3$) | Apparent porosity (%) | Absorbed water (%) | MOE (20 °C) (GPa) | Thermal expansion coefficient (K$^{-1}$ 10$^{-6}$) |
|---|---|---|---|---|
| 2.9 | 15 | 5 | > 110 | 4.8 |

A roller was cut into axial sections each having a length of about 10cm. Some sections were treated to obtain different protective coatings according to the invention; some sections were instead not coated to be used as comparison samples in the chemical aggression tests, which will be described below.

Four rollers of the same type as the cut roller, each having a length of 4500mm and a diameter of 45mm, were instead kept intact and treated to obtain four different protective coatings according to the invention. These four rollers coated according to the invention were intended for the performance of thermal shock tests which will be described below.

Making the protective coating

The following procedure was followed in all the examples:

- preparation of the slurry to be applied on the roller body consisting of a section of roller;
- application of the slurry by cold spraying;
- sintering heat treatment.

For the preparation of the slurries (solutions of water and powders; slip), a 4-liter jug was used, adding 1 liter of water taken directly from the municipal waterworks. Then, under continuous stirring, due to the aid of an ATM Stirrer from Falc, 3% by weight of sodium tripolyphosphate (deflocculating agent), produced by the company Società Chimique ALKIMIA, was added to the water. The various amounts of ceramic powders were then slowly added to the aqueous solution, being careful not to create large agglomerates. Four different slurries were prepared. Table 3 shows the weight compositions of the solid phase of the four different slurries.

Table 3

| Mixture/ slurry number | Calcined alumina (Alteo) | Zirconium silicate (Industrie Bitossi) | Reactive alumina RG 4000 (Almatis) | Andalusite Kerphalite KF (Imerys) | Titanium dioxide (Bal - Co) |
|---|---|---|---|---|---|
| 1 | 45.5% | 54.5% | / | / | / |
| 2 | / | 54.5% | 45.5% | / | / |
| 3 | / | 43.0% | 48.0% | / | 9.0% |
| 4 | / | 32.25% | 39.25% | 28.5% | / |

Table 4 shows the chemical compositions and particle sizes of the powders (raw materials) used for the preparation of the four types of slurries/mixtures.

Table 4

| Raw material | Particle Size (D50) μm | Chemical composition | | | | | | |
|---|---|---|---|---|---|---|---|---|
| | | $Al_2O_3$ (%) | $Na_2O$ (%) | $Fe_2O_3$ (%) | $SiO_2$ (%) | $ZrO_2$ (%) | $TiO_2$ (%) | Other impurities (%) |
| Reactive alumina RG 4000 (Almatis) | 0.6 | 99.8 | 0.08 | 0.02 | 0.03 | 0.03 | / | 0.04 |
| Calcined alumina (Alteo) | 5.5 | 99.5 | / | / | / | / | / | 0.5 |
| Zirconium silicate Zircobit MO (Industrie Bitossi) | 1.43 | 1.2 | / | 0.07 | 32.5 | 64.8 | / | 1.43 |
| Andalusite Kerphalite KF (Imerys) | 5.0 | 60.8 | 0.10 | 0.45 | 37.8 | / | / | 0.85 |
| Titanium dioxide anatase (Bal-Co) | 0.4 | / | / | 0.03 | / | / | 98.50 | 1.47 |

In an unclaimed embodiment, the slurry consists of powders (dry powder mixture) and water in a 1:1 weight ratio. The amount of dry powders is added in the same amount by weight of water (example: 1500 g of dry powders in 1500 ml of water, plus the deflocculating agent).

The application of the slurries/mixtures was carried out by cold spraying using an IM 260 series airbrush (lower tank of 1000 cc, 2.2mm nozzle) of the brand Asturo.

The application was conducted so as to obtain the maximum possible homogeneity of the protective coating. More in detail, during the spraying all the roller pieces were rotated with a speed of 8 seconds per revolution. Once all the coated pieces had air dried, the application process was repeated a second time. Such a procedure was followed both on the 10cm pieces and on the two complete rollers.

Once the coating formation step was completed, the sintering heat treatment was performed.

The coated, 10cm long roller pieces were heat treated in a Nabertherm HT 16/17 electric muffle kiln, following a sintering cycle comprising a heating step at a temperature of 1600 for a period of 120 minutes. The coated rollers 4500mm in length and with an external diameter of 45mm were subjected to the same heat treatment using a gas "shuttle" kiln present in the Keratech production department.

At the end of the heat treatments, both the roller pieces and the complete rollers had protective coatings without defects.

The coated roller pieces 10cm in length were subjected to X-ray diffraction analysis (XRD). The X-ray diffractometry technique is an analytical technique which is used to identify the crystalline phases present in a material. The amounts of zirconia ($ZrO_2$), mullite ($3Al_2O_3 \cdot 2SiO_2$) and corundum ($Al_2O_3$) were measured for each sample.

The analyses were performed on the surfaces of the samples consisting of the roller pieces with the different protective coatings according to the invention. Sample no. 1 corresponds to a roller piece with the coating made with slurry/mixture no. 1; sample no. 2 with slurry/mixture no. 2; sample no. 3 with slurry/mixture no. 3; sample no. 4 with slurry/mixture no. 4.

Table 5 shows the results relating to the amounts of crystalline phases belonging to the protective coatings of the various samples.

Table 5

| No. Sample/ Coating | Zirconia % by weight | Mullite % by weight | Corundum % by weight | Titanium dioxide and/or ZrTiO4 % by weight | Amorphous silica % by weight |
|---|---|---|---|---|---|
| 1 | 27% | 52% | 20% | / | 1% |
| 2 | 42% | 45% | 12% | / | 1% |
| 3 | 33% | 18% | 39% | 9% | 1% |
| 4 | 19% | 72% | 8% | / | 1% |

THERMAL SHOCK TESTS

As previously mentioned, four rollers of the same type as the cut roller, each having a length of 4500mm and a diameter of 45mm, were instead kept intact and treated to obtain the protective coatings according to the invention defined as in Table 5. These four rollers coated according to the invention were subjected to thermal shock tests.

More specifically, the four coated rollers were inserted and extracted from the module of a continuous gas kiln. Two insertions and two extractions of the coated rollers were performed in a temperature range between 1200°C and 25°C.

The coatings of all four rollers maintained the structure thereof intact even after having undergone two extractions and two insertions, which occurred in the temperature range between 25°C and 1200°C.

CHEMICAL AGGRESSION RESISTANCE TESTS

Uncoated roller pieces and coated roller pieces according to the invention corresponding to the above four samples were subjected to two different chemical aggression resistance tests:

- violent aggression test;
- weak aggression test.

Both tests were performed at the temperature 1200°C, maintaining this temperature for 30 hours.

Violent aggression test

In the violent aggression test, ten coated roller pieces, two for each type of coating, were inserted inside three refractory boxes of nitrided silicon carbide (SiC/Si3N4), together with three uncoated roller pieces. All the roller pieces, coated and uncoated, were then totally covered with sodium carbonate ($Na_2CO_3$). Finally, the heat cycle of the kiln was started at a temperature of 1200°C, maintaining it for 30 hours.

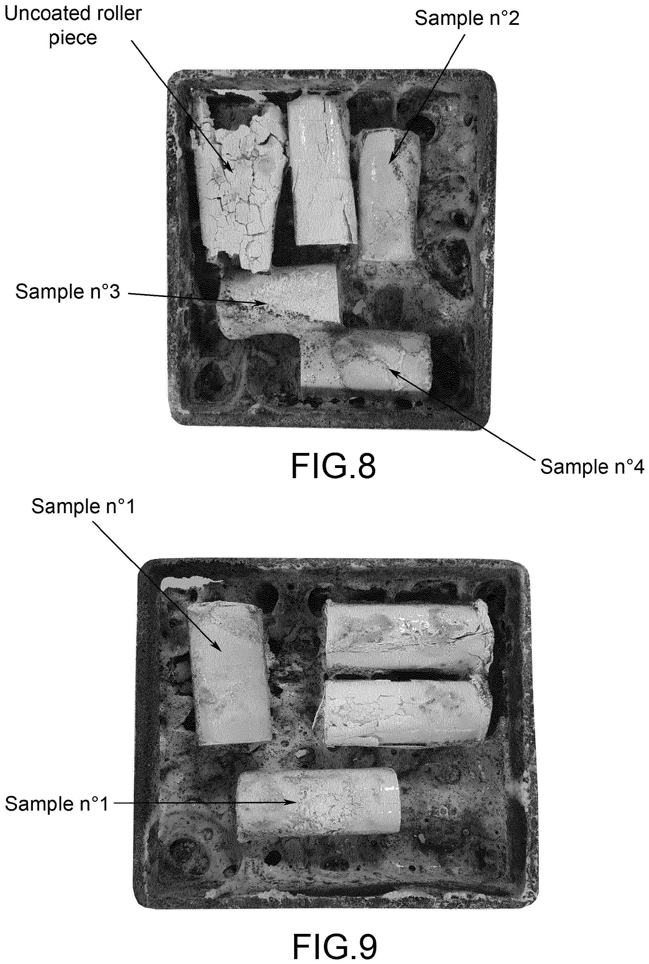

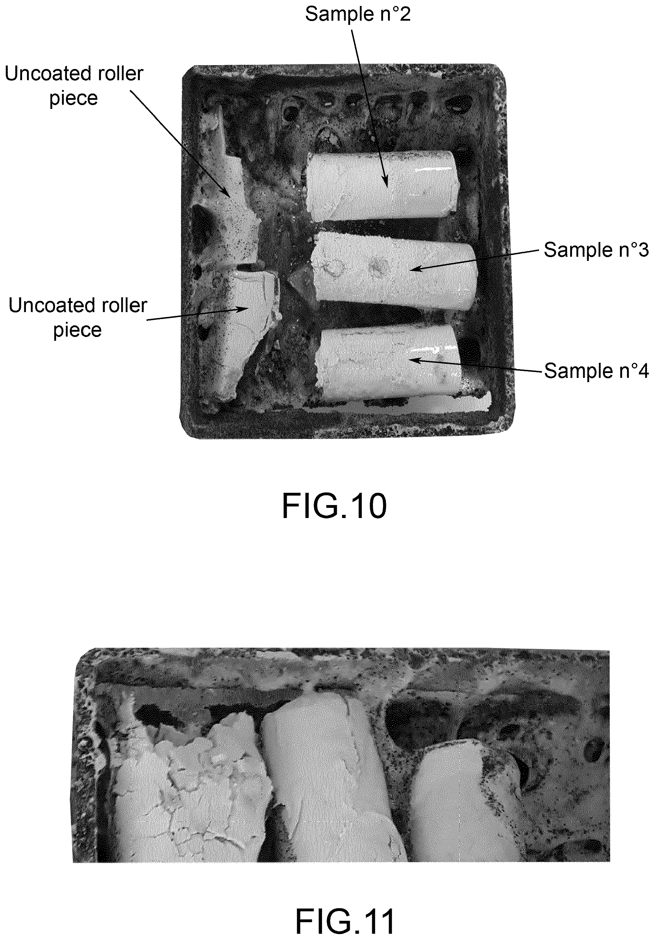

Once the heat cycle was completed, as seen in Figures 8, 9 and 10, it was found that the coated samples (samples 1, 2, 3 and 4) had only some defects, while the uncoated roller samples had been completely destroyed. Finally, it was found that the nitrided silicon carbide casing (SiC/Si3N4) was also severely attacked by $Na_2CO_3$, up to the complete deterioration thereof (Figure 11).

Weak aggression test

As regards the weak aggression test, the previous test was repeated, however, by varying the aggressive chemical agent. In fact, the sodium carbonate ($Na_2CO_3$) was replaced with sodium chloride (NaCl) (2 Kg). Then, five coated roller pieces, one for each type of coating, together with three uncoated roller pieces, were again inserted into two refractory boxes of nitrided silicon carbide (SiC/Si3N4). All the coated and uncoated roller pieces were then immersed with only one side of the rollers in the sodium chloride (NaCl) compound, the aggressive agent. Finally, the heat cycle of the kiln was started at a temperature of 1200°C, maintaining such a temperature for 30 hours.

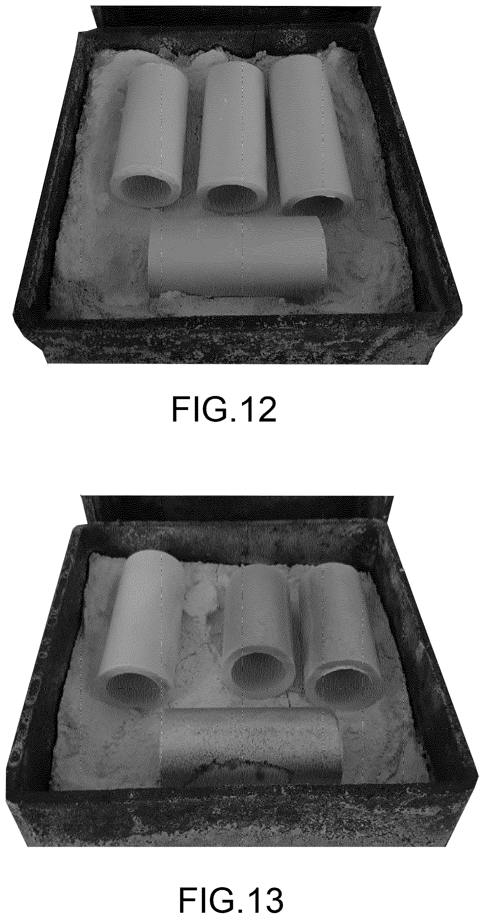

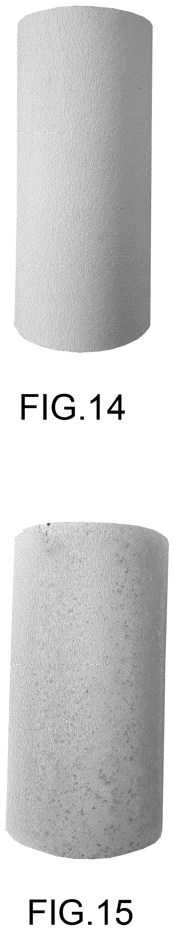

Once the heat cycle was completed, the coated samples were found to have no imperfections from chemical aggression (Figure 12). In fact, as reported in Figures 14 and 15, the coated sample no. 4 did not show any imperfections or defects, while the uncoated refractory roller sample clearly shows the signs of chemical aggression by the sodium chloride (Figure 15).

Both the weak and strong aggression tests showed that, from the macroscopic perspective, the rollers coated according to the invention clearly suffered minimal aggression by the two aggressive chemical agents used (Na2CO3 and NaCl).

Interpretation of weak aggression test results

In order to interpret the results concerning the coated and uncoated roller sample resistance to weak aggression, analyses were carried out on all the samples using the scanning electron microscopy (SEM) technique, with the aim of being capable of identifying the degree of penetration of the pollutants inside the ceramic refractory bodies.

In order to understand the results obtained and, therefore, to interpret the outcome of the tests, the reactions reported in the study by Takahashi et al. was taken into consideration (Takahashi, Y. Kawai, S. Shimada, Hot corrosion of cordierite/mullite composites by Na-salts, Journal of the European ceramic society 22 (2002) 1959 - 1969). The reactions between mullite and sodium chloride salt (corrosive agent used in the weak aggression test) are reported below:

$$2(3Al_2O_3 \cdot 2SiO_2) + 8NaCl(l) + O_2 \rightarrow 4NaAlSiO_4(s) + 4Al_2O_3(s) + 2Na_2O(s) + 4Cl_2 \, (g)$$

$$Al_2O_3(s) + Na_2O(s) \rightarrow 2NaAlSiO_2(s)$$

Seeing the first reaction, it is found that the mullite (3Al2O3·2SiO2) reacts with eight moles of sodium chloride (NaCl) and one mole of oxygen (O2), to produce four moles of β-carnegieite (NaAlSiO4), four moles of alumina (Al2O3), two moles of sodium oxide (Na2O) and four moles of chlorine gas (Cl2). β-carnegieite is a silicate obtained by heating nepheline to temperatures above 1000°C. Both β-carnegieite and nepheline (Na2O Al2O3 2SiO2) belong to the feldspathoid group.

As will be seen from the results reported below, the fact that the percentage of alumina inside the sample decreases as a function of the degree of chemical aggression is most likely due to the development of β-carnegieite inside the samples, produced by the reaction between mullite and albite (Na2O Al2O3 2SiO2), also formed by the reaction between mullite and sodium oxide, as reported in the study by Nathan S. Jacobs, Kaang N. Lee, Corrosion of mullite by molten salts, J. Am. Ceram. Soc., 79[8] 2161-67 (1996) :

$$3(3Al_2O_3 \cdot 2SiO_2) + Na_2O \rightarrow Na_2O \cdot Al_2O_3 \cdot 6SiO_2 + 8Al_2O_3$$

$$2(Na_2O \cdot Al_2O_3 \cdot 6SiO_2) + 4Na_2O + 4Al_2O_3 \rightarrow 6(Na_2O \cdot Al_2O_3 \cdot 2SiO_2)$$

Hence, the decrease in alumina can be attributed to the formation of β-carnegieite and sodium aluminate (NaAlO2).

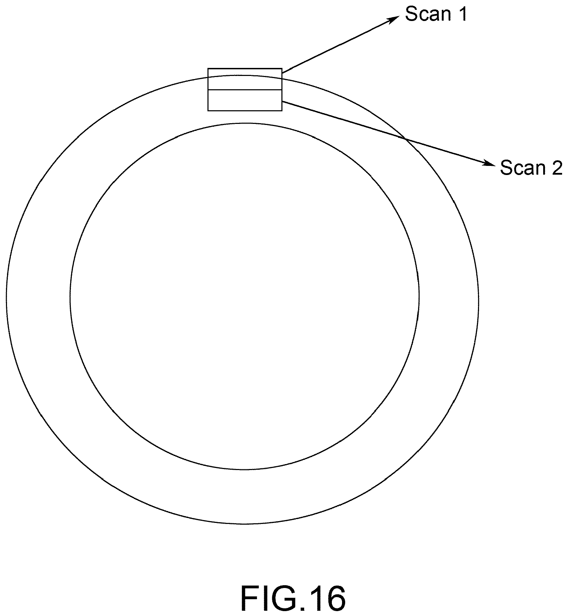

In order to identify the degree of absorption of pollutants by the roller bodies, the first four millimeters of thickness from the outer surface of the samples were analyzed by scanning electron microscopy (SEM), quantifying the following compounds: sodium oxide (Na2O), magnesium oxide (MgO), alumina (Al2O3), silica (SiO2), chlorine (Cl), calcium oxide (CaO) and zirconia (ZrO2). Each sample was marked with two scans, one referred to the first two millimeters of thickness (upper rectangle in Figure 16 indicated with the arrow "scan 1") and one referred to the second two millimeters of thickness (lower rectangle in Figure 16 indicated with the arrow "scan 2"), thus trying to identify the degree of penetration of the sodium oxide (Na2O) in the ceramic body and, finally, to identify the loss of alumina.

Then, each analyzed scan was divided into 10 spectra which each analyze a portion of about 200pm of sample along the thickness thereof. In each scan, each spectrum depicts the values of each chemical species analyzed.

It was decided to analyze the first two millimeters of thickness for each sample, since the maximum chemical aggression by the corrosive agent sodium chloride (NaCl) occurred on this portion of the refractory body.

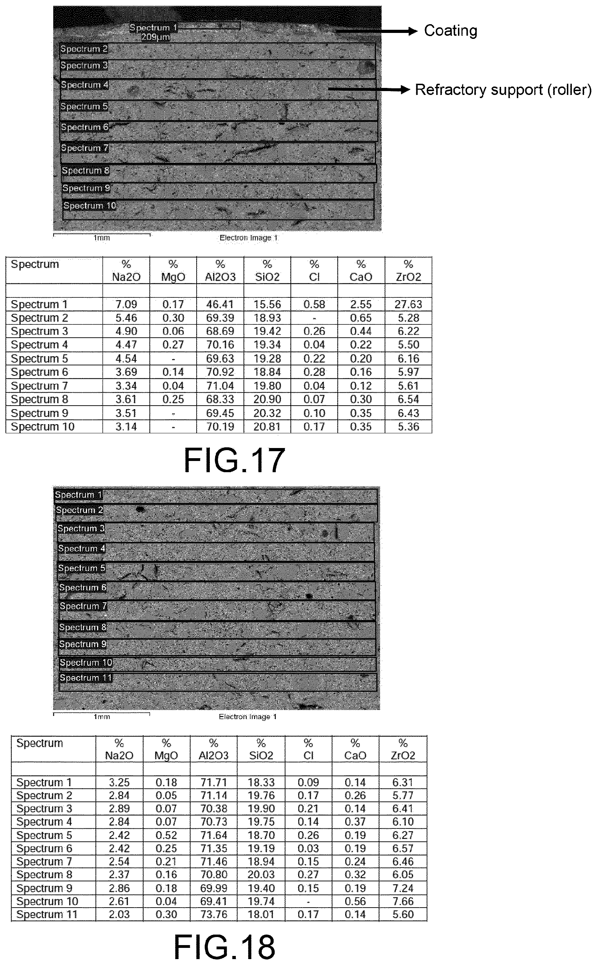

Figures 17 to 27 show the results of the SEM analyses carried out on samples 1, 2, 3 and 4 of the rollers coated according to the invention and on a sample of uncoated roller.

Analysis of the SEM spectra on sample no. 1

Sample no. 1 corresponds to a roller with protective coating in zirconia and mullite obtained by sintering calcined alumina and zirconium silicate. The analyses of sample 1 are shown in Figures 17 and 18.

The sample coating thickness was found to measure about 108pm.

The protective coating consists of 27.63% by weight of zirconia ($ZrO2$), formed by the dissociation of zirconium silicate ($ZrSiO4$) at a temperature of 1600°C. Spectrum 1 in Figure 17 also reveals the presence of a low percentage of chlorine ($Cl2$) (about 0.6%) which testifies to a substantial absence of reaction between the corrosive agent (NaCl) and the coating (consisting of zirconia and mullite). In other words, the low percentage of chlorine shows that the following reaction did not occur:

$$2(3Al_2O_3 \cdot 2SiO_2) + 8NaCl(l) + O_2 \rightarrow 4NaAlSiO_4(s) + 4Al_2O_3(s) + 2Na_2O(s) + 4Cl_2 \text{ (g)}$$

Therefore, it can be concluded, by virtue of a percentage of zirconia not less than 15% by weight present in the protective coating of sample number 1, in the coating - roller body interface zone (refractory support "(spectra 2, 3, 4 Figure 17) it was possible to obtain a decrease in the penetration of sodium oxide ($Na2O$) (4.5 - 5.46%), which reaches negligible values (2 - 3.5%) in the remaining area of the analyzed sample (spectra depicted in Figures 17 and 18).

Furthermore, if the values of alumina ($Al2O3$) present in the scan in Figure 17 are examined, an increase in the alumina phase present at the interface level (zone between the protective coating - body of the mullite roller) is seen, most likely due to the lack of corrosion reaction between mullite and sodium oxide ($Na2O$). The absence of the corrosion reaction is also confirmed by the low percentages of chlorine ($Cl2$) analyzed in spectrum 1 (Figure 17).

Far from the interface (spectrum no. 6 in Figure 18), it is seen that the levels of Al2O3 are high (71.3%). Furthermore, the percentage of sodium oxide ($Na2O$) in this zone of the roller is quite low (2.4%) and that of chlorine is substantially zero. This is due to the fact that the aggressive reaction was minimal.

The weight content of zirconia in the protective coating (27.63%) detected by the SEM analysis substantially corresponds to the value detected by the XRD analysis (27%), as reported in Table 5.

Analysis of the SEM spectra on sample no. 2

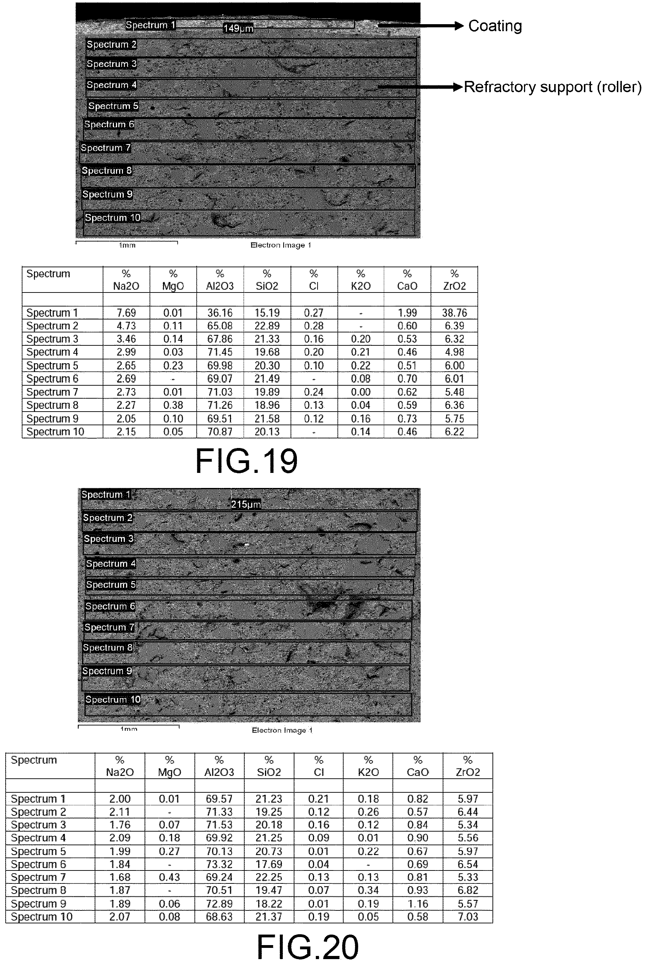

Sample no. 2 corresponds to a roller with protective coating in zirconia and mullite obtained by sintering reactive alumina and zirconium silicate. The analyses of sample no. 1 are shown in Figures 19 and 20.

The sample coating thickness was found to measure about $100\mu$m.

Examining spectrum no. 1 in Figure 19, it is understood that the coating consists of zirconia ($ZrO2$) at 38.5% by weight. The highest value of zirconia found in the protective coating of sample no. 2 compared to the previous sample no. 1 is substantially attributable to the presence of reactive alumina in the sintering step, absent in the sintering of the protective coating of sample no. 1. The greater specific surface area of reactive alumina favored sintering, leading to a higher percentage of zirconia after heat treatment at 1600°C.

By analyzing the SEM results, it is apparent that the higher percentage of zirconia present in the coating leads to a lower penetration by sodium oxide ($Na2O$). In fact, while spectrum 1 in Figure 19 shows a high percentage of Na2O, most likely due to the "barrier" effect that the coating actuates with respect to sodium oxide, the material has very low Na2O values below the protective coating (2 - 3%). Finally, the spectra in Figure 19 show very low traces of chlorine ($Cl2$), reflecting the substantial absence of reaction between mullite and sodium chloride (NaCl).

In conclusion, having found high values of alumina ($Al2O3$), low values of both sodium oxide ($Na2O$) and chlorine ($Cl2$) in sample no. 2, it can be stated that the corrosion reaction of mullite

$$2(3Al_2O_3 \cdot 2SiO_2) + 8NaCl(l) + O_2 \rightarrow 4NaAlSiO_4(s) + 4Al_2O_3(s) + 2Na_2O(s) + 4Cl_2 \text{ (g)}$$

in sample number 2 occurred in a small, if not negligible, manner.

The weight content of zirconia in the protective coating (38.5% by weight) detected by the SEM analysis substantially corresponds to the value detected by the XRD analysis (42%), as reported in Table 5.

Analysis of the SEM spectra on sample no. 3

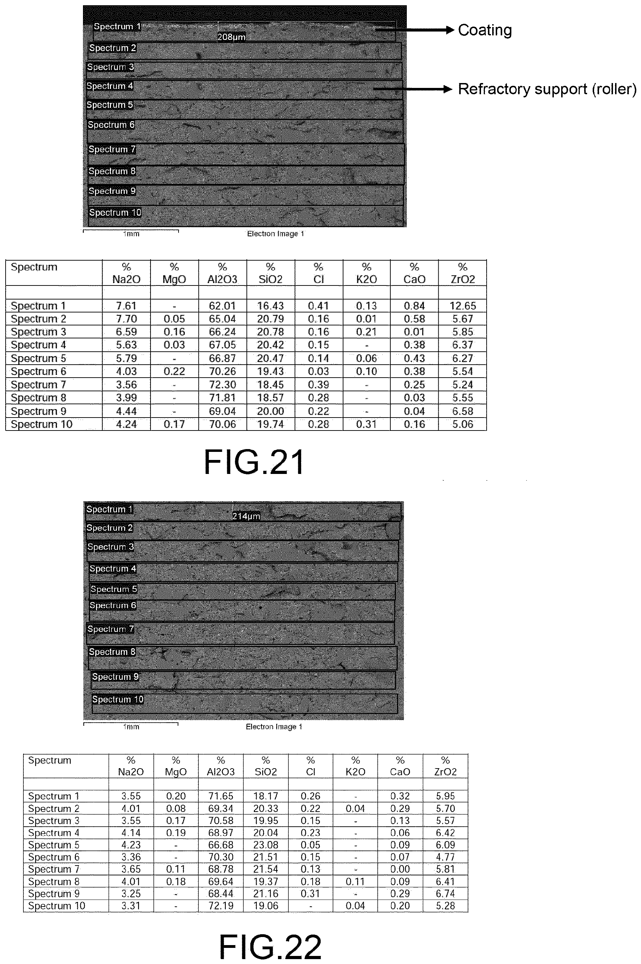

Sample no. 3 corresponds to a roller with protective coating in zirconia and mullite obtained by sintering reactive alumina, zirconium silicate and titanium dioxide. The analyses of sample no. 1 are shown in Figures 21, 22 and 23.

The sample coating thickness was found to measure about $45\mu$m.

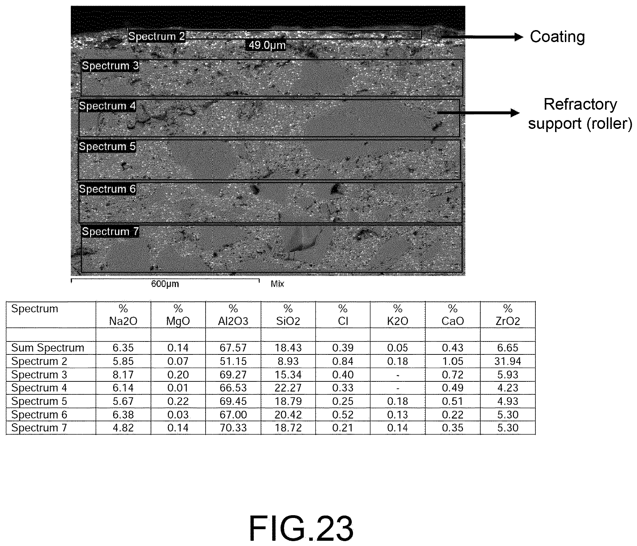

Analyzing spectrum no. 1 in Figure 23 (SEM spectrum of the coating of sample number 3 with maximum resolution) it is seen that the coating consists of zirconia ($ZrO2$) at about 32% by weight. The low values of alumina (Al2O3) present in the material in the zone below the coating (Figure 21) can indicate that the corrosion reaction of the mullite has occurred, albeit modestly.

The weight content of zirconia in the protective coating (32% by weight) detected by the SEM analysis substantially corresponds to the value detected by the XRD analysis (33%), as reported in Table 5.

The SEM analyses did not reveal the presence of titanium dioxide and/or zirconium titanate. This is connected to the fact that the structure of zirconium titanate and titanium dioxide are not easy to detect due to the reflections of the remaining crystalline phases which are present in greater amount with respect thereto.

Analysis of the SEM spectra on sample no. 4

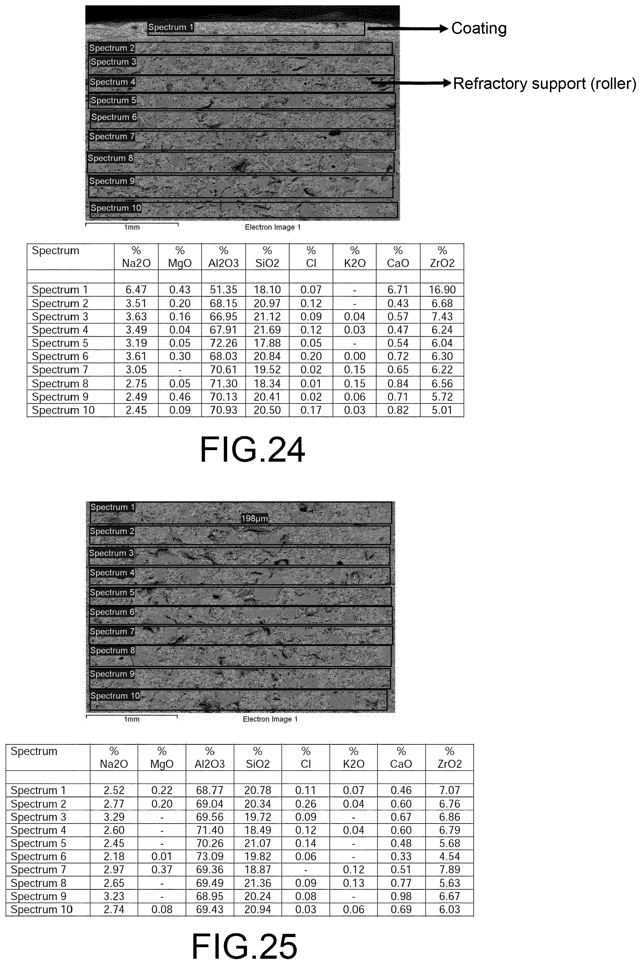

Sample no. 4 corresponds to a roller with protective coating in zirconia and mullite obtained by sintering reactive alumina, zirconium silicate and andalusite. The analyses of sample no. 1 are shown in Figures 24 and 25.

The sample coating thickness was found to measure about 200pm.

Analyzing spectrum no. 1 in Figure 24, it is seen that the coating consists of zirconia (ZrO2) at about 17% by weight.

The values of sodium oxide (Na2O) and chlorine (Cl2) found in Figure 24 are quite low. As found in sample number 2, also in sample 4 the coating acted as a barrier against sodium oxide (Na2O) (spectrum number 1 in Figure 24) .

The weight content of zirconia in the protective coating (17% by weight) detected by the SEM analysis substantially corresponds to the value detected by the XRD analysis (19%), as reported in Table 5.

Analysis of the SEM spectra on the uncoated sample

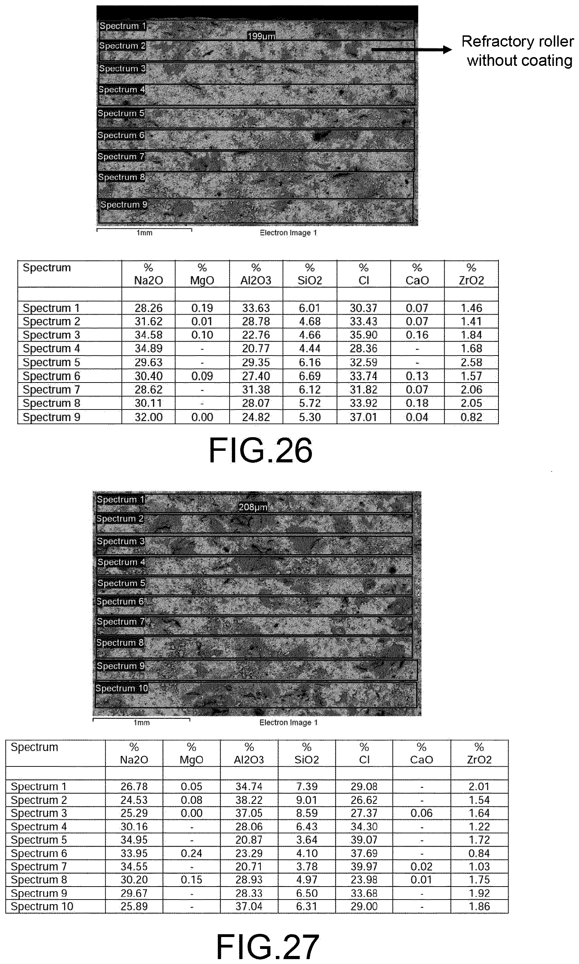

As regards the uncoated refractory roller sample, the results are reported in Figures 26 and 27.

Looking at both Figures, it is understood that the entire 4mm section of the refractory roller suffered a high degree of aggression by sodium oxide (Na2O). In fact, all the spectra present in Figures 26 and 27 show a very high pollution by sodium oxide (values between 24.5% and 34.9%). In addition to the high percentage of sodium oxide (Na2O), the analyses indicate the presence of high percentages of chlorine (Cl2), developed during the reaction between mullite and the corrosive agent. In addition to chlorine, very low values of alumina (Al2O3) and silica (SiO2) are found, reflecting the fact that new phases have formed inside the crystal lattice ($\beta$-carnegieite and sodium aluminate (NaAlO2)).

Coated and uncoated roller analysis comparison

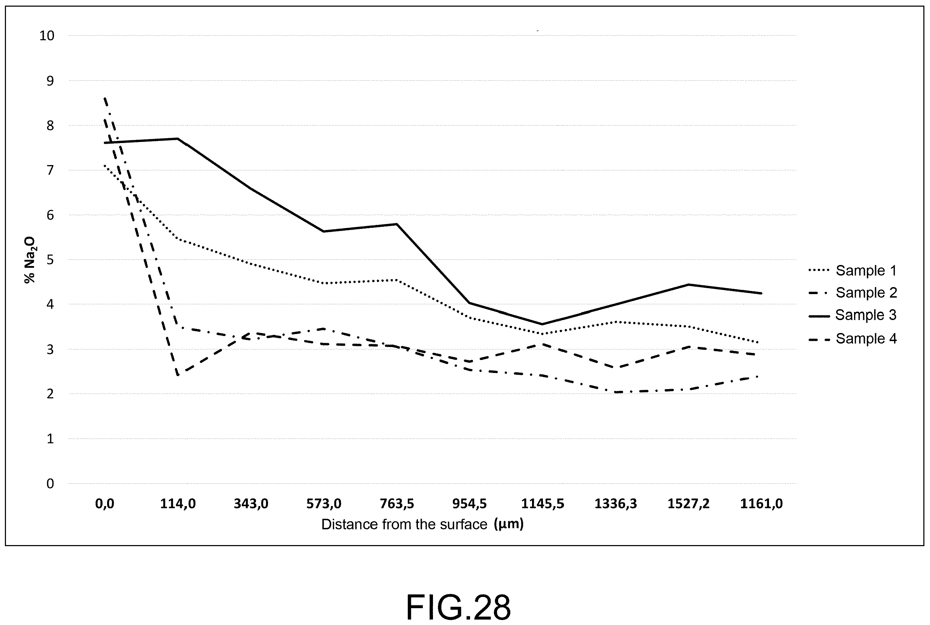

Figure 28 shows the graph for each of the samples nos. 1, 2, 3 and 4 of the coated rollers, the values of the sodium oxide (Na2O) content as a function of the distance from the surface. The data are related to the thickness of the first millimeter from the surface.

It can be noted that the most effective protective coating in terms of reducing chemical aggression is that of sample no. 2, as it has on average the lowest values of Na2O inside the roller body. The least effective protective coating in terms of reducing chemical aggression is instead that of sample no. 3, as it has on average the highest values of Na2O inside the roller body.

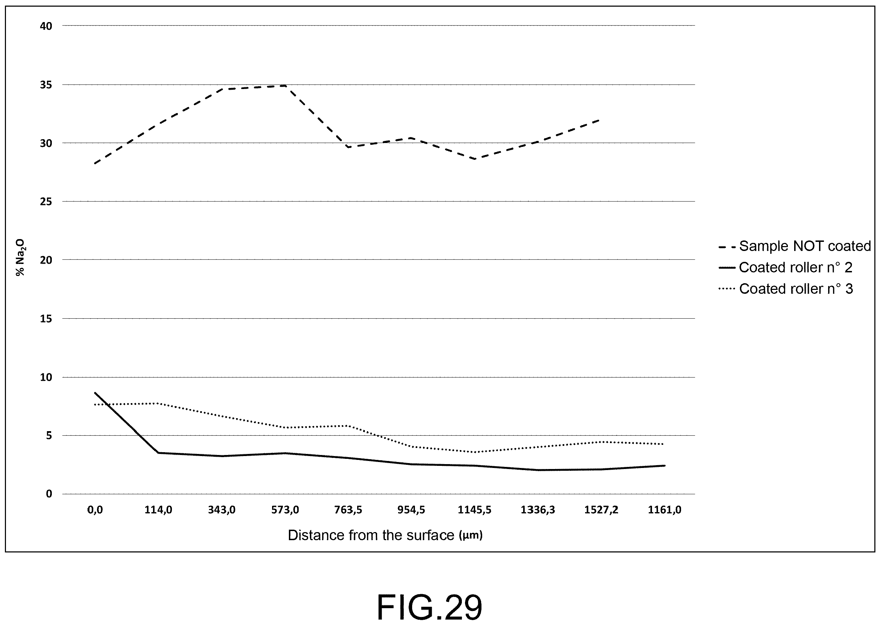

The effectiveness in terms of reducing the chemical aggression of the protective coatings according to the invention can be appreciated by comparing the values of Na2O in the rollers coated according to the invention with the values of Na2O in the uncoated roller subjected to the same weak aggression test. In fact, it passes from an average Na2O value of about 5% for the coated rollers to an average Na2O value of about 30% in the uncoated roller. Such a difference in performance can be appreciated graphically in Figure 29, where the data of the Na2O content are reported as a function of the distance from the surface for samples nos. 2 and 3 and for the uncoated roller.

From the graphs in Figure 29 the significant difference in the penetration of sodium oxide in the damages of the coated samples compared to the uncoated one can be clearly appreciated.

The effectiveness of the protection offered by the protective coatings according to the invention is further confirmed by the fact that the weak aggression test to which the coated and uncoated roller samples were subjected (1200°C for 30 hours in direct contact with NaCl) simulates a significantly more intense chemical aggression situation than that to which the rollers in continuous ceramic slab kilns are normally subjected.

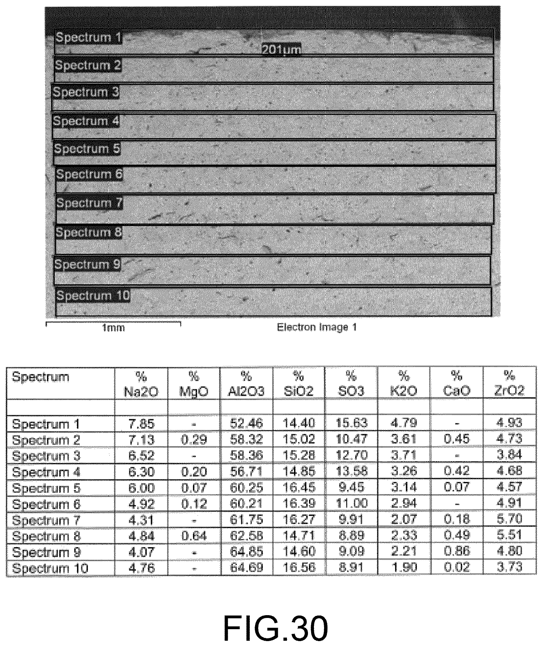

For this purpose, an SEM analysis of an uncoated roller was carried out after being used for 8 months in a kiln for firing ceramic tiles operating in a company which uses highly aggressive slurries and a combustible gas with high amounts of sulfur. The SEM analysis was limited to the first two millimeters from the outer surface. Figure 30 shows the data of such an SEM analysis.

It can be seen that the uncoated roller used for 8 months in a tile kiln suffered considerably less aggression from alkali compounds than the aggression that the uncoated roller piece suffered when it was used in the weak aggression test (1200°C in direct contact with the NaCl salt for 30 hours). In fact, when seeing the percentage of sodium oxide (Na2O) present in the roller used in the kiln for a period of 8 months, it can be seen that the values of Na2O fall in the range between 4% - 7.85% (Figure 30), while for the uncoated roller which has been subjected to the weak aggression test, it can be seen that the Na2O values fall in the range between 28% - 35% (Figure 26).

All this suggests that the weak aggression test was able to simulate an aggression seven and a half times greater than that which occurs against the refractory rollers during the application thereof in a ceramic kiln for a period of 8 months. Since the coated roller samples according to the invention were also tested during the weak aggression test and since the latter have Na2O values in the range 2% - 8%, it can be stated that the rollers coated according to the invention, once applied in the continuous gas kilns for tiles, will suffer less aggression than that seen during both the weak aggression test, and that analyzed in the uncoated roller after being used in a ceramic tile kiln in a permanence of 8 months.

It can therefore be concluded that the rollers coated according to the invention are significantly less prone to infiltrations of foreign elements in the mullite crystal lattice, in particular they are less prone to alkali infiltrations, with respect to the same uncoated rollers.

The rollers coated according to the invention therefore have features such as to make them suitable for use in continuous ceramic slab kilns, being capable of preventing the penetration of melting elements released by the ceramic plates during firing and the formation of new phases inside the crystalline mullite matrix and, therefore, reduce the risk of destructive phenomena occurring as a result of operating temperature variations.

From the above description, the rollers coated according to the invention are cost-effective to produce, since the use of particularly expensive raw materials is not required to make them, nor the use of dedicated plants.

Therefore, the invention thus conceived achieves the preset objects.

## Claims

1. A roller (1) for ceramic slab kilns, comprising a roller body (10), having an outer surface (20) which in use is intended to come into contact with ceramic slabs, said roller body (10) being made of a first refractory material having a mullite content of not less than 40% by weight, wherein said roller (1) comprises a protective coating (30), which covers said roller body (10) at least at said outer surface (20), **characterized in that** said protective coating (30) is made of a second refractory material having a content between 15% and 45% by weight of zirconia and has an average thickness of not less than 45um.

2. A roller according to claim 1, wherein the average thickness of said protective coating is not more than $250\mu m$, preferably is between 45 and 200um, and even more preferably is between 100 and 200um.

3. A roller according to any one of the preceding claims, wherein said second refractory material of which said protective coating is made consists of:

   - from 15% to 45% by weight of zirconia;
   - from 5% to 40% by weight of corundum;
   - from 15% to 75% by weight of mullite;
   - from 0 to 10% by weight of titanium dioxide and/or zirconium titanate; and
   - the remainder by amorphous silica.

4. A method of making a roller for ceramic slab kilns, comprising an operating step a) of making a roller body of a first refractory material having a mullite content of not less than 40% by weight, said roller body having an outer surface which in use is intended to come into contact with the ceramic slabs,
   **characterized in that** it comprises an operating step b) of making on said roller body - at least at said outer surface

   - a protective coating of a second refractory material having a content between 15% and 45% by weight of zirconia and an average thickness of not less than 45um.

5. A method according to claim 4, wherein the average thickness of said protective coating is not more than $250\mu m$, preferably is between 45 and 200um, and even more preferably is between 100 and 200um.

6. A method according to claim 4 or 5, wherein said second refractory material of which said protective coating is made consists of:

   - from 15% to 45% by weight of zirconia;

- from 5% to 40% by weight of corundum;
- from 15% to 75% by weight of mullite;
- from 0 to 10% by weight of titanium dioxide and/or zirconium titanate; and
- the remainder by amorphous silica.

**7.** A method according to any one of claims 4 to 6, wherein said operating step b) of making said protective coating includes:

- depositing on at least the outer surface of said roller body a layer of slurry comprising at least powdered zirconium silicate, preferably by cold spraying; and
- heat treating the roller body with said layer of slurry to decompose the zirconium silicate of said slurry and obtain zirconia according to the reaction

$$ZrSiO_4 \rightarrow ZrO_2 + SiO_2$$

thus obtaining from said layer of slurry said surface coating of said second refractory material.

**8.** A method according to claim 7, wherein said slurry also comprises powdered alumina and wherein the roller body with said layer of slurry is heat treated so as to sinter the alumina and zirconium silicate of said slurry into mullite and zirconia according to the reaction

$$2ZrSiO_4 + 3Al_2O_3 \rightarrow 2ZrO_2 + 3Al_2O_3 \cdot 2SiO_2$$

thus obtaining from said layer of slurry said surface coating of said second refractory material.

**9.** A method according to claim 8, wherein the roller body with said layer of slurry is heat treated at temperatures between 1500°C and 1650°C, preferably of 1600°C, for a period of time not less than 90 minutes and wherein preferably the powdered zirconium silicate has particle size D50 between 0.5 and 10.0pm, and even more preferably between 0.5 and 2.0$\mu$m.

**10.** A method according to claim 8 or 9, wherein the solid phase of said slurry consists of:

- 40% to 60% by weight of powdered calcined alumina, preferably 45.5% by weight, preferably with particle size D50 between 1.0 and 7.0$\mu$m, and even more preferably between 4.0 and 7.0$\mu$m;
- 40% to 60% by weight of powdered zirconium silicate, preferably 54.5% by weight, preferably with particle size D50 between 0.5 and 10.0$\mu$m, and even more preferably between 0.5 and 2.0$\mu$m, and

wherein preferably said second refractory material consists of:

- 27% by weight of zirconia;
- 20% by weight of corundum;
- 52% by weight of mullite;
- 1% by amorphous silica.

**11.** A method according to claim 8 or 9, wherein the solid phase of said slurry consists of:

- 40% to 60% by weight of powdered reactive alumina, preferably 45.5% by weight, preferably with particle size D50 between 0.1 and 1.0pm;
- 40% to 60% by weight of powdered zirconium silicate, preferably 54.5% by weight, preferably with particle size D50 between 0.5 and 10.0pm, and even more preferably between 0.5 and 2.0$\mu$m,

wherein preferably said second refractory material consists of:

- 42% by weight of zirconia;
- 12% by weight of corundum;
- 45% by weight of mullite;
- 1% by amorphous silica.

18

**12.** A method according to claim 8 or 9, wherein the solid phase of said slurry consists of:

- 39% to 60% by weight of powdered reactive alumina, preferably 48.0% by weight, preferably with particle size D50 between 0.1 and 1.0pm;
- 39% to 60% by weight of powdered zirconium silicate, preferably 43.0%, preferably with particle size D50 between 0.5 and 10.0pm, and even more preferably between 0.5 and $2.0\mu$m; and
- 0.1% to 10% by weight of powdered titanium dioxide, preferably 9.0%, preferably with particle size D50 between 0.1 and 10.0pm, and even more preferably between 0.3 and 0.6um,

wherein preferably said second refractory material consists of:

- 33% by weight of zirconia;
- 39% by weight of corundum;
- 18% by weight of mullite;
- 9% by weight of titanium dioxide and/or zirconium titanate;
- 1% by amorphous silica.

**13.** A method according to claim 8 or 9, wherein the solid phase of said slurry consists of:

- 35% to 45% by weight of powdered reactive alumina, preferably 39.25% by weight, preferably with particle size D50 between 0.1 and 1.0pm;
- 25% to 35% by weight of powdered zirconium silicate, preferably 32.25% by weight, preferably with particle size D50 between 0.5 and $10.0\mu$m, and even more preferably between 0.5 and $2.0\mu$m; and
- 20% to 30% by weight of powdered andalusite, preferably 28.5% by weight, preferably with a content of impurities, in particular consisting of potassium oxide, sodium oxide and iron oxide, not exceeding 2% by weight, preferably with particle size D50 between 1.0 and 10.0pm, and even more preferably between 4.0 and $7.0\mu$m.

wherein preferably said second refractory material consists of:

- 19% by weight of zirconia;
- 8% by weight of corundum;
- 72% by weight of mullite;
- 1% by amorphous silica.

**14.** A method according to any one of claims 4 to 13, wherein said step a) of making a roller body made of a first refractory material includes sintering, preferably at temperatures between 1500°C and 1650°C and for a period of time not less than 90 minutes, a roller body previously obtained by forming and then drying a slurry of powders of predefined components - in terms of composition and amount.

**15.** A method according to claim 14, wherein said powders of components are chosen - in terms of composition and amount - to obtain a refractory material at the end of sintering consisting of:

- from 40% to 90% by weight of mullite,
- from 10% to 50% by weight of corundum,
- from 0% to 10% by weight of zirconia; and
- from 0% to 7% of amorphous silica.

**Patentansprüche**

**1.** Rolle (1) für Keramikplattenöfen, umfassend einen Rollenkörper (10) mit einer Außenfläche (20), die im Gebrauch dazu bestimmt ist, mit Keramikplatten in Kontakt zu kommen, wobei der Rollenkörper (10) aus einem ersten feuerfesten Material mit einem Mullitgehalt von nicht weniger als 40 Gew.-% hergestellt ist, wobei die Rolle (1) eine Schutzbeschichtung (30) umfasst, die den Rollenkörper (10) zumindest an der Außenfläche (20) bedeckt, **dadurch gekennzeichnet, dass** die Schutzbeschichtung (30) aus einem zweiten feuerfesten Material mit einem Gehalt an Zirkoniumdioxid zwischen 15 und 45 Gew.-% hergestellt ist und eine mittlere Dicke von nicht weniger als 45 $\mu$m aufweist.

**2.** Rolle nach Anspruch 1, wobei die mittlere Dicke der Schutzbeschichtung nicht mehr als 250 $\mu$m, vorzugsweise zwischen 45 und 200 $\mu$m und noch bevorzugter zwischen 100 und 200 $\mu$m beträgt.

**3.** Rolle nach einem der vorhergehenden Ansprüche, wobei das zweite feuerfeste Material, aus dem die Schutzbeschichtung hergestellt ist, besteht aus:

- von 15 bis 45 Gew.-% Zirkoniumdioxid;
- von 5 bis 40 Gew.-% Korund
- von 15 bis 75 Gew.-% Mullit;
- von 0 bis 10 Gew.-% Titandioxid und/oder Zirkoniumtitanat; und
- der Rest aus amorphem Siliziumdioxid.

**4.** Verfahren zur Herstellung einer Rolle für Keramikplattenöfen, umfassend einen Arbeitsschritt a) des Herstellens eines Rollenkörpers aus einem ersten feuerfesten Material mit einem Mullitgehalt von nicht weniger als 40 Gew.-%, wobei der Rollenkörper eine Außenfläche aufweist, die im Gebrauch dazu bestimmt ist, mit den Keramikplatten in Kontakt zu kommen,
**dadurch gekennzeichnet, dass** es einen Arbeitsschritt b) umfasst, des Herstellens auf dem Rollenkörper - zumindest an der Außenfläche - einer Schutzbeschichtung aus einem zweiten feuerfesten Material mit einem Gehalt an Zirkoniumdioxid zwischen 15 und 45 Gew.-% und einer mittleren Dicke von nicht weniger als 45 $\mu$m.

**5.** Verfahren nach Anspruch 4, wobei die mittlere Dicke der Schutzbeschichtung nicht mehr als 250 $\mu$m, vorzugsweise zwischen 45 und 200 $\mu$m und noch bevorzugter zwischen 100 und 200 $\mu$m beträgt.

**6.** Verfahren nach Anspruch 4 oder 5, wobei das zweite feuerfeste Material, aus dem die Schutzbeschichtung hergestellt wird, besteht aus:

- von 15 bis 45 Gew.-% Zirkoniumdioxid;
- von 5 bis 40 Gew.-% Korund
- von 15 bis 75 Gew.-% Mullit;
- von 0 bis 10 Gew.-% Titandioxid und/oder Zirkoniumtitanat; und
- der Rest aus amorphem Siliziumdioxid.

**7.** Verfahren nach einem der Ansprüche 4 bis 6, wobei der Arbeitsschritt b) des Herstellens der Schutzbeschichtung einschließt:

- das Aufbringen einer Schicht aus Aufschlämmung, die zumindest pulverförmiges Zirkoniumsilikat umfasst, auf mindestens die Außenfläche des Rollenkörpers, vorzugsweise durch Kaltbesprühen; und
- Wärmebehandeln des Rollenkörpers mit der Schicht aus Aufschlämmung, um das Zirkoniumsilikat der Aufschlämmung zu zersetzen und Zirkoniumdioxid gemäß der folgenden Reaktion zu erhalten

$$ZrSiO_4 \rightarrow ZrO_2 + SiO_2$$

wodurch man aus der Schicht aus Aufschlämmung die Oberflächenbeschichtung des zweiten feuerfesten Materials erhält.

**8.** Verfahren nach Anspruch 7, wobei die Aufschlämmung auch pulverisiertes Aluminiumoxid umfasst und wobei der Rollenkörper mit der Schicht aus Aufschlämmung wärmebehandelt wird, um das Aluminiumoxid und das Zirkoniumsilikat der Aufschlämmung zu Mullit und Zirkoniumdioxid gemäß der folgenden Reaktion zu sintern

$$2ZrSiO_4 + 3Al_2O_3 \rightarrow 2ZrO_2 + 3Al_2O_3 \cdot 2SiO_2$$

wodurch man aus der Schicht aus Aufschlämmung die Oberflächenbeschichtung des zweiten feuerfesten Materials erhält.

**9.** Verfahren nach Anspruch 8, wobei der Rollenkörper mit der Schicht aus Aufschlämmung bei Temperaturen zwischen 1500°C und 1650°C, vorzugsweise von 1600°C, über einen Zeitraum von nicht weniger als 90 Minuten wärmebehandelt wird und wobei das pulverförmige Zirkonsilikat vorzugsweise eine Teilchengröße D50 zwischen 0,5 und 10,0 $\mu$m und noch bevorzugter zwischen 0,5 und 2,0 $\mu$m aufweist.

**10.** Verfahren nach Anspruch 8 oder 9, wobei die feste Phase der Aufschlämmung besteht aus:

- 40 bis 60 Gew.-% pulverförmigem kalziniertem Aluminiumoxid, vorzugsweise 45,5 Gew.-%, vorzugsweise mit einer Teilchengröße D50 zwischen 1,0 und 7,0 $\mu$m, und noch bevorzugter zwischen 4,0 und 7,0 $\mu$m;
- 40 bis 60 Gew.-% pulverförmigem Zirkoniumsilikat, vorzugsweise 54,5 Gew.-%, vorzugsweise mit einer Teilchengröße D50 zwischen 0,5 und 10,0 $\mu$m und noch bevorzugter zwischen 0,5 und 2,0 $\mu$m, und

wobei das zweite feuerfeste Material vorzugsweise besteht aus:

- 27 Gew.-% Zirkoniumdioxid;
- 20 Gew.-% Korund;
- 52 Gew.-% Mullit;
- 1 % amorphem Siliziumdioxid.

**11.** Verfahren nach Anspruch 8 oder 9, wobei die feste Phase der Aufschlämmung besteht aus:

- 40 bis 60 Gew.-% pulverförmigem reaktivem Aluminiumoxid, vorzugsweise 45,5 Gew.-%, vorzugsweise mit einer Teilchengröße D50 zwischen 0,1 und 1,0 $\mu$m;
- 40 bis 60 Gew.-% pulverförmigem Zirkoniumsilikat, vorzugsweise 54,5 Gew.-%, vorzugsweise mit einer Teilchengröße D50 zwischen 0,5 und 10,0 $\mu$m, und noch bevorzugter zwischen 0,5 und 2,0 $\mu$m,

wobei das zweite feuerfeste Material vorzugsweise besteht aus:

- 42 Gew.-% Zirkoniumdioxid;
- 12 Gew.-% Korund;
- 45 Gew.-% Mullit;
- 1 % amorphem Siliziumdioxid.

**12.** Verfahren nach Anspruch 8 oder 9, wobei die feste Phase der Aufschlämmung besteht aus:

- 39 bis 60 Gew.-% pulverförmigem reaktivem Aluminiumoxid, vorzugsweise 48,0 Gew.-%, vorzugsweise mit einer Teilchengröße D50 zwischen 0,1 und 1,0 $\mu$m;
- 39 bis 60 Gew.-% pulverförmigem Zirkoniumsilikat, vorzugsweise 43,0%, vorzugsweise mit einer Teilchengröße D50 zwischen 0,5 und 10,0 $\mu$m und noch bevorzugter zwischen 0,5 und 2,0 $\mu$m; und
- 0,1 bis 10 Gew.-% pulverförmigem Titandioxid, vorzugsweise 9,0%, vorzugsweise mit einer Teilchengröße D50 zwischen 0,1 und 10,0 $\mu$m und noch bevorzugter zwischen 0,3 und 0,6 $\mu$m,

wobei das zweite feuerfeste Material vorzugsweise besteht aus:

- 33 Gew.-% Zirkoniumdioxid;
- 39 Gew.-% Korund;
- 18 Gew.-% Mullit;
- 9 Gew.-% Titandioxid und/oder Zirkoniumtitanat;
- 1 % amorphem Siliziumdioxid.

**13.** Verfahren nach Anspruch 8 oder 9, wobei die feste Phase der Aufschlämmung besteht aus:

- 35 bis 45 Gew.-% pulverförmigem reaktivem Aluminiumoxid, vorzugsweise 39,25 Gew.-%, vorzugsweise mit einer Teilchengröße D50 zwischen 0,1 und 1,0 $\mu$m;
- 25 bis 35 Gew.-% pulverförmigem Zirkoniumsilikat, vorzugsweise 32,25 Gew.-%, vorzugsweise mit einer Teilchengröße D50 zwischen 0,5 und 10,0 $\mu$m und noch bevorzugter zwischen 0,5 und 2,0 $\mu$m; und
- 20 bis 30 Gew.-% pulverisiertem Andalusit, vorzugsweise 28,5 Gew.-%, vorzugsweise mit einem Gehalt an Verunreinigungen, insbesondere bestehend aus Kaliumoxid, Natriumoxid und Eisenoxid, der 2 Gew.-% nicht übersteigt, vorzugsweise mit einer Teilchengröße D50 zwischen 1,0 und 10,0 $\mu$m und noch bevorzugter zwischen 4,0 und 7,0 $\mu$m,

wobei das zweite feuerfeste Material vorzugsweise besteht aus:

- 19 Gew.-% Zirkoniumdioxid;
- 8 Gew.-% Korund;
- 72 Gew.-% Mullit;
- 1 % amorphem Siliziumdioxid.

14. Verfahren nach einem der Ansprüche 4 bis 13, wobei der Schritt a) des Herstellens eines Rollenkörpers, hergestellt aus einem ersten feuerfesten Material, das Sintern, vorzugsweise bei Temperaturen zwischen 1500°C und 1650°C und über einen Zeitraum von nicht weniger als 90 Minuten, eines Rollenkörpers einschließt, der zuvor durch Formen und anschließendes Trocknen einer Aufschlämmung von Pulvern aus vordefinierten Komponenten - in Bezug auf Zusammensetzung und Menge - erhalten wurde.

15. Verfahren nach Anspruch 14, wobei die Pulver der Komponenten so - in Bezug auf Zusammensetzung und Menge - gewählt werden, dass am Ende des Sinterns ein feuerfestes Material erhalten wird, das besteht aus:

   - von 40 bis 90 Gew.-% Mullit,
   - von 10 bis 50 Gew.-% Korund
   - von 0 bis 10 Gew.-% Zirkoniumdioxid; und
   - von 0 bis 7 % amorphem Siliziumdioxid.

**Revendications**

1. Rouleau (1) pour fours de plaques en céramique, comprenant un corps de rouleau (10), ayant une surface externe (20) qui, en utilisation, est destinée à entrer en contact avec des plaques en céramique, ledit corps de rouleau (10) étant fait d'un premier matériau réfractaire ayant une teneur en mullite non inférieure à 40 % en poids, dans lequel ledit rouleau (1) comprend un revêtement protecteur (30), qui recouvre ledit corps de rouleau (10) au moins sur ladite surface externe (20), **caractérisé en ce que** ledit revêtement protecteur (30) est fait d'un second matériau réfractaire ayant une teneur entre 15 % et 45 % en poids de zircone et présente une épaisseur moyenne non inférieure à 45 $\mu$m.

2. Rouleau selon la revendication 1, dans lequel l'épaisseur moyenne dudit revêtement protecteur n'est pas supérieure à 250 $\mu$m, de préférence est entre 45 et 200 $\mu$m, et de manière davantage préférée est entre 100 et 200 $\mu$m.

3. Rouleau selon l'une quelconque des revendications précédentes, dans lequel ledit second matériau réfractaire dont ledit revêtement protecteur est fait est constitué :

   - de 15 % à 45 % en poids de zircone ;
   - de 5 % à 40 % en poids de corindon ;
   - de 15 % à 75 % en poids de mullite ;
   - de 0 à 10 % en poids de dioxyde de titane et/ou de titanate de zirconium ; et
   - le reste étant de la silice amorphe.

4. Procédé de fabrication d'un rouleau pour fours de plaques en céramique, comprenant une étape opératoire a) de fabrication d'un corps de rouleau en un premier matériau réfractaire ayant une teneur en mullite non inférieure à 40 % en poids, ledit corps de rouleau ayant une surface externe qui, en utilisation, est destinée à entrer en contact avec les plaques en céramique,
   **caractérisé en ce qu'**il comprend une étape opératoire b) de fabrication sur ledit corps de rouleau - au moins sur ladite surface externe - d'un revêtement protecteur en un second matériau réfractaire ayant une teneur entre 15 % et 45 % en poids de zircone et une épaisseur moyenne non inférieure à 45 $\mu$m.

5. Procédé selon la revendication 4, dans lequel l'épaisseur moyenne dudit revêtement protecteur n'est pas supérieure à 250 $\mu$m, de préférence est entre 45 et 200 $\mu$m, et de manière davantage préférée est entre 100 et 200 $\mu$m.

6. Procédé selon la revendication 4 ou 5, dans lequel ledit second matériau réfractaire dont ledit revêtement protecteur est fait est constitué :

   - de 15 % à 45 % en poids de zircone ;
   - de 5 % à 40 % en poids de corindon ;

- de 15 % à 75 % en poids de mullite ;
- de 0 à 10 % en poids de dioxyde de titane et/ou de titanate de zirconium ; et
- le reste étant de la silice amorphe.

**7.** Procédé selon l'une quelconque des revendications 4 à 6, dans lequel ladite étape opératoire b) de fabrication dudit revêtement protecteur comprend :

- le dépôt, sur au moins la surface externe dudit corps de rouleau, d'une couche de coulis comprenant au moins du silicate de zirconium pulvérulent, de préférence par pulvérisation à froid ; et
- le traitement thermique du corps de rouleau ayant ladite couche de coulis pour décomposer le silicate de zirconium dudit coulis et obtenir de la zircone selon la réaction

$$ZrSiO_4 \rightarrow ZrO_2 + SiO_2$$

pour ainsi obtenir, à partir de ladite couche de coulis, ledit revêtement de surface dudit second matériau réfractaire.

**8.** Procédé selon la revendication 7, dans lequel ledit coulis comprend également de l'alumine pulvérulente et dans lequel le corps de rouleau ayant ladite couche de coulis est traité thermiquement de manière à fritter l'alumine et le silicate de zirconium dudit coulis en mullite et zircone selon la réaction

$$2ZrSiO_4 + 3Al_2O_3 \rightarrow 2ZrO_2 + 3Al_2O_3.2SiO_2$$

pour ainsi obtenir, à partir de ladite couche de coulis, ledit revêtement de surface dudit second matériau réfractaire.

**9.** Procédé selon la revendication 8, dans lequel le corps de rouleau ayant ladite couche de coulis est traité thermiquement à des températures entre 1500 °C et 1650 °C, de préférence de 1600 °C, pendant une période de temps non inférieure à 90 minutes et dans lequel, de préférence, le silicate de zirconium pulvérulent présente une taille de particule D50 entre 0,5 et 10,0 $\mu$m, et de manière davantage préférée entre 0,5 et 2,0 $\mu$m.

**10.** Procédé selon la revendication 8 ou 9, dans lequel la phase solide dudit coulis est constituée de :

- 40 % à 60 % en poids d'alumine calcinée pulvérulente, de préférence 45,5 % en poids, de préférence avec une taille de particule D50 entre 1,0 et 7,0 $\mu$m, et de manière davantage préférée entre 4,0 et 7,0 $\mu$m ;
- 40 % à 60 % en poids de silicate de zirconium pulvérulent, de préférence 54,5 % en poids, de préférence avec une taille de particule D50 entre 0,5 et 10,0 $\mu$m, et de manière davantage préférée entre 0,5 et 2,0 $\mu$m, et

dans lequel, de préférence, ledit second matériau réfractaire est constitué de :

- 27 % en poids de zircone ;
- 20 % en poids de corindon ;
- 52 % en poids de mullite ;
- 1 % de silice amorphe.

**11.** Procédé selon la revendication 8 ou 9, dans lequel la phase solide dudit coulis est constituée de :

- 40 % à 60 % en poids d'alumine réactive pulvérulente, de préférence 45,5 % en poids, de préférence avec une taille de particule D50 entre 0,1 et 1,0 $\mu$m ;
- 40 % à 60 % en poids de silicate de zirconium pulvérulent, de préférence 54,5 % en poids, de préférence avec une taille de particule D50 entre 0,5 et 10,0 $\mu$m, et de manière davantage préférée entre 0,5 et 2,0 $\mu$m,

dans lequel, de préférence, ledit second matériau réfractaire est constitué de :

- 42 % en poids de zircone ;
- 12 % en poids de corindon ;
- 45 % en poids de mullite ;
- 1 % de silice amorphe.

**12.** Procédé selon la revendication 8 ou 9, dans lequel la phase solide dudit coulis est constituée de :

- 39 % à 60 % en poids d'alumine réactive pulvérulente, de préférence 48,0 % en poids, de préférence avec une taille de particule D50 entre 0,1 et 1,0 $\mu$m ;
- 39 % à 60 % en poids de silicate de zirconium pulvérulent, de préférence 43,0 %, de préférence avec une taille de particule D50 entre 0,5 et 10,0 $\mu$m, et de manière davantage préférée entre 0,5 et 2,0 $\mu$m ; et
- 0,1 % à 10 % en poids de dioxyde de titane pulvérulent, de préférence 9,0 %, de préférence avec une taille de particule D50 entre 0,1 et 10,0 $\mu$m, et de manière davantage préférée entre 0,3 et 0,6 $\mu$m,

dans lequel, de préférence, ledit second matériau réfractaire est constitué de :

- 33 % en poids de zircone ;
- 39 % en poids de corindon ;
- 18 % en poids de mullite ;
- 9 % en poids de dioxyde de titane et/ou de titanate de zirconium ;
- 1 % de silice amorphe.

**13.** Procédé selon la revendication 8 ou 9, dans lequel la phase solide dudit coulis est constituée de :

- 35 % à 45 % en poids d'alumine réactive pulvérulente, de préférence 39,25 % en poids, de préférence avec une taille de particule D50 entre 0,1 et 1,0 $\mu$m ;
- 25 % à 35 % en poids de silicate de zirconium pulvérulent, de préférence 32,25 % en poids, de préférence avec une taille de particule D50 entre 0,5 et 10,0 $\mu$m, et de manière davantage préférée entre 0,5 et 2,0 $\mu$m ; et
- 20 % à 30 % en poids d'andalousite pulvérulente, de préférence 28,5 % en poids, de préférence avec une teneur en impuretés, en particulier constituées d'oxyde de potassium, d'oxyde de sodium et d'oxyde de fer, n'excédant pas 2 % en poids, de préférence avec une taille de particule D50 entre 1,0 et 10,0 $\mu$m, et de manière davantage préférée entre 4,0 et 7,0 $\mu$m,

dans lequel, de préférence, ledit second matériau réfractaire est constitué de :

- 19 % en poids de zircone ;
- 8 % en poids de corindon ;
- 72 % en poids de mullite ;
- 1 % de silice amorphe.

**14.** Procédé selon l'une quelconque des revendications 4 à 13, dans lequel ladite étape a) de fabrication d'un corps de rouleau en un premier matériau réfractaire comprend le frittage, de préférence à des températures entre 1500 °C et 1650 °C et pendant une période de temps non inférieure à 90 minutes, d'un corps de rouleau préalablement obtenu en formant puis en séchant un coulis de poudres de composants prédéfinis - en termes de composition et de quantité.

**15.** Procédé selon la revendication 14, dans lequel lesdites poudres de composants sont choisies - en termes de composition et de quantité - pour obtenir un matériau réfractaire en fin de frittage constitué :

- de 40 % à 90 % en poids de mullite,
- de 10 % à 50 % en poids de corindon,
- de 0 % à 10 % en poids de zircone ; et
- de 0 % à 7 % de silice amorphe.

FIG.2

FIG.1

R

FIG.4

R

FIG.3

26

R

FIG.5

R

FIG.6

FIG.7

FIG.8

FIG.9

FIG.10

FIG.11

FIG.12

FIG.13

FIG.14

FIG.15

FIG.16

| Spectrum | % Na2O | % MgO | % Al2O3 | % SiO2 | % Cl | % CaO | % ZrO2 |
|---|---|---|---|---|---|---|---|
| | | | | | | | |
| Spectrum 1 | 7.09 | 0.17 | 46.41 | 15.56 | 0.58 | 2.55 | 27.63 |
| Spectrum 2 | 5.46 | 0.30 | 69.39 | 18.93 | - | 0.65 | 5.28 |
| Spectrum 3 | 4.90 | 0.06 | 68.69 | 19.42 | 0.26 | 0.44 | 6.22 |
| Spectrum 4 | 4.47 | 0.27 | 70.16 | 19.34 | 0.04 | 0.22 | 5.50 |
| Spectrum 5 | 4.54 | - | 69.63 | 19.28 | 0.22 | 0.20 | 6.16 |
| Spectrum 6 | 3.69 | 0.14 | 70.92 | 18.84 | 0.28 | 0.16 | 5.97 |
| Spectrum 7 | 3.34 | 0.04 | 71.04 | 19.80 | 0.04 | 0.12 | 5.61 |
| Spectrum 8 | 3.61 | 0.25 | 68.33 | 20.90 | 0.07 | 0.30 | 6.54 |
| Spectrum 9 | 3.51 | - | 69.45 | 20.32 | 0.10 | 0.35 | 6.43 |
| Spectrum 10 | 3.14 | - | 70.19 | 20.81 | 0.17 | 0.35 | 5.36 |

## FIG.17

| Spectrum | % Na2O | % MgO | % Al2O3 | % SiO2 | % Cl | % CaO | % ZrO2 |
|---|---|---|---|---|---|---|---|
| | | | | | | | |
| Spectrum 1 | 3.25 | 0.18 | 71.71 | 18.33 | 0.09 | 0.14 | 6.31 |
| Spectrum 2 | 2.84 | 0.05 | 71.14 | 19.76 | 0.17 | 0.26 | 5.77 |
| Spectrum 3 | 2.89 | 0.07 | 70.38 | 19.90 | 0.21 | 0.14 | 6.41 |
| Spectrum 4 | 2.84 | 0.07 | 70.73 | 19.75 | 0.14 | 0.37 | 6.10 |
| Spectrum 5 | 2.42 | 0.52 | 71.64 | 18.70 | 0.26 | 0.19 | 6.27 |
| Spectrum 6 | 2.42 | 0.25 | 71.35 | 19.19 | 0.03 | 0.19 | 6.57 |
| Spectrum 7 | 2.54 | 0.21 | 71.46 | 18.94 | 0.15 | 0.24 | 6.46 |
| Spectrum 8 | 2.37 | 0.16 | 70.80 | 20.03 | 0.27 | 0.32 | 6.05 |
| Spectrum 9 | 2.86 | 0.18 | 69.99 | 19.40 | 0.15 | 0.19 | 7.24 |
| Spectrum 10 | 2.61 | 0.04 | 69.41 | 19.74 | - | 0.56 | 7.66 |
| Spectrum 11 | 2.03 | 0.30 | 73.76 | 18.01 | 0.17 | 0.14 | 5.60 |

## FIG.18

→ Coating

→ Refractory support (roller)

1mm          Electron Image 1

| Spectrum | % Na2O | % MgO | % Al2O3 | % SiO2 | % Cl | % K2O | % CaO | % ZrO2 |
|---|---|---|---|---|---|---|---|---|
| Spectrum 1 | 7.69 | 0.01 | 36.16 | 15.19 | 0.27 | - | 1.99 | 38.76 |
| Spectrum 2 | 4.73 | 0.11 | 65.08 | 22.89 | 0.28 | - | 0.60 | 6.39 |
| Spectrum 3 | 3.46 | 0.14 | 67.86 | 21.33 | 0.16 | 0.20 | 0.53 | 6.32 |
| Spectrum 4 | 2.99 | 0.03 | 71.45 | 19.68 | 0.20 | 0.21 | 0.46 | 4.98 |
| Spectrum 5 | 2.65 | 0.23 | 69.98 | 20.30 | 0.10 | 0.22 | 0.51 | 6.00 |
| Spectrum 6 | 2.69 | - | 69.07 | 21.49 | - | 0.08 | 0.70 | 6.01 |
| Spectrum 7 | 2.73 | 0.01 | 71.03 | 19.89 | 0.24 | 0.00 | 0.62 | 5.48 |
| Spectrum 8 | 2.27 | 0.38 | 71.26 | 18.96 | 0.13 | 0.04 | 0.59 | 6.36 |
| Spectrum 9 | 2.05 | 0.10 | 69.51 | 21.58 | 0.12 | 0.16 | 0.73 | 5.75 |
| Spectrum 10 | 2.15 | 0.05 | 70.87 | 20.13 | - | 0.14 | 0.46 | 6.22 |

# FIG.19

1mm          Electron Image 1

| Spectrum | % Na2O | % MgO | % Al2O3 | % SiO2 | % Cl | % K2O | % CaO | % ZrO2 |
|---|---|---|---|---|---|---|---|---|
| Spectrum 1 | 2.00 | 0.01 | 69.57 | 21.23 | 0.21 | 0.18 | 0.82 | 5.97 |
| Spectrum 2 | 2.11 | - | 71.33 | 19.25 | 0.12 | 0.26 | 0.57 | 6.44 |
| Spectrum 3 | 1.76 | 0.07 | 71.53 | 20.18 | 0.16 | 0.12 | 0.84 | 5.34 |
| Spectrum 4 | 2.09 | 0.18 | 69.92 | 21.25 | 0.09 | 0.01 | 0.90 | 5.56 |
| Spectrum 5 | 1.99 | 0.27 | 70.13 | 20.73 | 0.01 | 0.22 | 0.67 | 5.97 |
| Spectrum 6 | 1.84 | - | 73.32 | 17.69 | 0.04 | - | 0.69 | 6.54 |
| Spectrum 7 | 1.68 | 0.43 | 69.24 | 22.25 | 0.13 | 0.13 | 0.81 | 5.33 |
| Spectrum 8 | 1.87 | - | 70.51 | 19.47 | 0.07 | 0.34 | 0.93 | 6.82 |
| Spectrum 9 | 1.89 | 0.06 | 72.89 | 18.22 | 0.01 | 0.19 | 1.16 | 5.57 |
| Spectrum 10 | 2.07 | 0.08 | 68.63 | 21.37 | 0.19 | 0.05 | 0.58 | 7.03 |

# FIG.20

→ Coating

→ Refractory support (roller)

| Spectrum | % Na2O | % MgO | % Al2O3 | % SiO2 | % Cl | % K2O | % CaO | % ZrO2 |
|---|---|---|---|---|---|---|---|---|
| | | | | | | | | |
| Spectrum 1 | 7.61 | - | 62.01 | 16.43 | 0.41 | 0.13 | 0.84 | 12.65 |
| Spectrum 2 | 7.70 | 0.05 | 65.04 | 20.79 | 0.16 | 0.01 | 0.58 | 5.67 |
| Spectrum 3 | 6.59 | 0.16 | 66.24 | 20.78 | 0.16 | 0.21 | 0.01 | 5.85 |
| Spectrum 4 | 5.63 | 0.03 | 67.05 | 20.42 | 0.15 | - | 0.38 | 6.37 |
| Spectrum 5 | 5.79 | - | 66.87 | 20.47 | 0.14 | 0.06 | 0.43 | 6.27 |
| Spectrum 6 | 4.03 | 0.22 | 70.26 | 19.43 | 0.03 | 0.10 | 0.38 | 5.54 |
| Spectrum 7 | 3.56 | - | 72.30 | 18.45 | 0.39 | - | 0.25 | 5.24 |
| Spectrum 8 | 3.99 | - | 71.81 | 18.57 | 0.28 | - | 0.03 | 5.55 |
| Spectrum 9 | 4.44 | - | 69.04 | 20.00 | 0.22 | - | 0.04 | 6.58 |
| Spectrum 10 | 4.24 | 0.17 | 70.06 | 19.74 | 0.28 | 0.31 | 0.16 | 5.06 |

# FIG.21

| Spectrum | % Na2O | % MgO | % Al2O3 | % SiO2 | % Cl | % K2O | % CaO | % ZrO2 |
|---|---|---|---|---|---|---|---|---|
| | | | | | | | | |
| Spectrum 1 | 3.55 | 0.20 | 71.65 | 18.17 | 0.26 | - | 0.32 | 5.95 |
| Spectrum 2 | 4.01 | 0.08 | 69.34 | 20.33 | 0.22 | 0.04 | 0.29 | 5.70 |
| Spectrum 3 | 3.55 | 0.17 | 70.58 | 19.95 | 0.15 | - | 0.13 | 5.57 |
| Spectrum 4 | 4.14 | 0.19 | 68.97 | 20.04 | 0.23 | - | 0.06 | 6.42 |
| Spectrum 5 | 4.23 | - | 66.68 | 23.08 | 0.05 | - | 0.09 | 6.09 |
| Spectrum 6 | 3.36 | - | 70.30 | 21.51 | 0.15 | - | 0.07 | 4.77 |
| Spectrum 7 | 3.65 | 0.11 | 68.78 | 21.54 | 0.13 | - | 0.00 | 5.81 |
| Spectrum 8 | 4.01 | 0.18 | 69.64 | 19.37 | 0.18 | 0.11 | 0.09 | 6.41 |
| Spectrum 9 | 3.25 | - | 68.44 | 21.16 | 0.31 | - | 0.29 | 6.74 |
| Spectrum 10 | 3.31 | - | 72.19 | 19.06 | - | 0.04 | 0.20 | 5.28 |

# FIG.22

Coating

Refractory support (roller)

| Spectrum | % Na2O | % MgO | % Al2O3 | % SiO2 | % Cl | % K2O | % CaO | % ZrO2 |
|---|---|---|---|---|---|---|---|---|
| | | | | | | | | |
| Sum Spectrum | 6.35 | 0.14 | 67.57 | 18.43 | 0.39 | 0.05 | 0.43 | 6.65 |
| Spectrum 2 | 5.85 | 0.07 | 51.15 | 8.93 | 0.84 | 0.18 | 1.05 | 31.94 |
| Spectrum 3 | 8.17 | 0.20 | 69.27 | 15.34 | 0.40 | - | 0.72 | 5.93 |
| Spectrum 4 | 6.14 | 0.01 | 66.53 | 22.27 | 0.33 | - | 0.49 | 4.23 |
| Spectrum 5 | 5.67 | 0.22 | 69.45 | 18.79 | 0.25 | 0.18 | 0.51 | 4.93 |
| Spectrum 6 | 6.38 | 0.03 | 67.00 | 20.42 | 0.52 | 0.13 | 0.22 | 5.30 |
| Spectrum 7 | 4.82 | 0.14 | 70.33 | 18.72 | 0.21 | 0.14 | 0.35 | 5.30 |

# FIG.23

Coating

Refractory support (roller)

| Spectrum | % Na2O | % MgO | % Al2O3 | % SiO2 | % Cl | % K2O | % CaO | % ZrO2 |
|---|---|---|---|---|---|---|---|---|
| Spectrum 1 | 6.47 | 0.43 | 51.35 | 18.10 | 0.07 | - | 6.71 | 16.90 |
| Spectrum 2 | 3.51 | 0.20 | 68.15 | 20.97 | 0.12 | - | 0.43 | 6.68 |
| Spectrum 3 | 3.63 | 0.16 | 66.95 | 21.12 | 0.09 | 0.04 | 0.57 | 7.43 |
| Spectrum 4 | 3.49 | 0.04 | 67.91 | 21.69 | 0.12 | 0.03 | 0.47 | 6.24 |
| Spectrum 5 | 3.19 | 0.05 | 72.26 | 17.88 | 0.05 | - | 0.54 | 6.04 |
| Spectrum 6 | 3.61 | 0.30 | 68.03 | 20.84 | 0.20 | 0.00 | 0.72 | 6.30 |
| Spectrum 7 | 3.05 | - | 70.61 | 19.52 | 0.02 | 0.15 | 0.65 | 6.22 |
| Spectrum 8 | 2.75 | 0.05 | 71.30 | 18.34 | 0.01 | 0.15 | 0.84 | 6.56 |
| Spectrum 9 | 2.49 | 0.46 | 70.13 | 20.41 | 0.02 | 0.06 | 0.71 | 5.72 |
| Spectrum 10 | 2.45 | 0.09 | 70.93 | 20.50 | 0.17 | 0.03 | 0.82 | 5.01 |

# FIG.24

| Spectrum | % Na2O | % MgO | % Al2O3 | % SiO2 | % Cl | % K2O | % CaO | % ZrO2 |
|---|---|---|---|---|---|---|---|---|
| Spectrum 1 | 2.52 | 0.22 | 68.77 | 20.78 | 0.11 | 0.07 | 0.46 | 7.07 |
| Spectrum 2 | 2.77 | 0.20 | 69.04 | 20.34 | 0.26 | 0.04 | 0.60 | 6.76 |
| Spectrum 3 | 3.29 | - | 69.56 | 19.72 | 0.09 | - | 0.67 | 6.86 |
| Spectrum 4 | 2.60 | - | 71.40 | 18.49 | 0.12 | 0.04 | 0.60 | 6.79 |
| Spectrum 5 | 2.45 | - | 70.26 | 21.07 | 0.14 | - | 0.48 | 5.68 |
| Spectrum 6 | 2.18 | 0.01 | 73.09 | 19.82 | 0.06 | - | 0.33 | 4.54 |
| Spectrum 7 | 2.97 | 0.37 | 69.36 | 18.87 | - | 0.12 | 0.51 | 7.89 |
| Spectrum 8 | 2.65 | - | 69.49 | 21.36 | 0.09 | 0.13 | 0.77 | 5.63 |
| Spectrum 9 | 3.23 | - | 68.95 | 20.24 | 0.08 | - | 0.98 | 6.67 |
| Spectrum 10 | 2.74 | 0.08 | 69.43 | 20.94 | 0.03 | 0.06 | 0.69 | 6.03 |

# FIG.25

| Spectrum | % Na2O | % MgO | % Al2O3 | % SiO2 | % Cl | % CaO | % ZrO2 |
|---|---|---|---|---|---|---|---|
| Spectrum 1 | 28.26 | 0.19 | 33.63 | 6.01 | 30.37 | 0.07 | 1.46 |
| Spectrum 2 | 31.62 | 0.01 | 28.78 | 4.68 | 33.43 | 0.07 | 1.41 |
| Spectrum 3 | 34.58 | 0.10 | 22.76 | 4.66 | 35.90 | 0.16 | 1.84 |
| Spectrum 4 | 34.89 | - | 20.77 | 4.44 | 28.36 | - | 1.68 |
| Spectrum 5 | 29.63 | - | 29.35 | 6.16 | 32.59 | - | 2.58 |
| Spectrum 6 | 30.40 | 0.09 | 27.40 | 6.69 | 33.74 | 0.13 | 1.57 |
| Spectrum 7 | 28.62 | - | 31.38 | 6.12 | 31.82 | 0.07 | 2.06 |
| Spectrum 8 | 30.11 | - | 28.07 | 5.72 | 33.92 | 0.18 | 2.05 |
| Spectrum 9 | 32.00 | 0.00 | 24.82 | 5.30 | 37.01 | 0.04 | 0.82 |

# FIG.26

| Spectrum | % Na2O | % MgO | % Al2O3 | % SiO2 | % Cl | % CaO | % ZrO2 |
|---|---|---|---|---|---|---|---|
| Spectrum 1 | 26.78 | 0.05 | 34.74 | 7.39 | 29.08 | - | 2.01 |
| Spectrum 2 | 24.53 | 0.08 | 38.22 | 9.01 | 26.62 | - | 1.54 |
| Spectrum 3 | 25.29 | 0.00 | 37.05 | 8.59 | 27.37 | 0.06 | 1.64 |
| Spectrum 4 | 30.16 | - | 28.06 | 6.43 | 34.30 | - | 1.22 |
| Spectrum 5 | 34.95 | - | 20.87 | 3.64 | 39.07 | - | 1.72 |
| Spectrum 6 | 33.95 | 0.24 | 23.29 | 4.10 | 37.69 | - | 0.84 |
| Spectrum 7 | 34.55 | - | 20.71 | 3.78 | 39.97 | 0.02 | 1.03 |
| Spectrum 8 | 30.20 | 0.15 | 28.93 | 4.97 | 23.98 | 0.01 | 1.75 |
| Spectrum 9 | 29.67 | - | 28.33 | 6.50 | 33.68 | - | 1.92 |
| Spectrum 10 | 25.89 | - | 37.04 | 6.31 | 29.00 | - | 1.86 |

# FIG.27

FIG.28

FIG.29

Electron Image 1

| Spectrum | % Na2O | % MgO | % Al2O3 | % SiO2 | % SO3 | % K2O | % CaO | % ZrO2 |
|---|---|---|---|---|---|---|---|---|
| Spectrum 1 | 7.85 | - | 52.46 | 14.40 | 15.63 | 4.79 | - | 4.93 |
| Spectrum 2 | 7.13 | 0.29 | 58.32 | 15.02 | 10.47 | 3.61 | 0.45 | 4.73 |
| Spectrum 3 | 6.52 | - | 58.36 | 15.28 | 12.70 | 3.71 | - | 3.84 |
| Spectrum 4 | 6.30 | 0.20 | 56.71 | 14.85 | 13.58 | 3.26 | 0.42 | 4.68 |
| Spectrum 5 | 6.00 | 0.07 | 60.25 | 16.45 | 9.45 | 3.14 | 0.07 | 4.57 |
| Spectrum 6 | 4.92 | 0.12 | 60.21 | 16.39 | 11.00 | 2.94 | - | 4.91 |
| Spectrum 7 | 4.31 | - | 61.75 | 16.27 | 9.91 | 2.07 | 0.18 | 5.70 |
| Spectrum 8 | 4.84 | 0.64 | 62.58 | 14.71 | 8.89 | 2.33 | 0.49 | 5.51 |
| Spectrum 9 | 4.07 | - | 64.85 | 14.60 | 9.09 | 2.21 | 0.86 | 4.80 |
| Spectrum 10 | 4.76 | - | 64.69 | 16.56 | 8.91 | 1.90 | 0.02 | 3.73 |

# FIG.30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011051270 A1
- CN 102649991 A

**Non-patent literature cited in the description**

- **CHANDRA, G. ; C. DAS ; U. SENGUPTA ; S. MAI-TRA.** Studies on the reaction sintered zirconia-mullite-alumina composites with titania as additive. *Ceramica,* 2013, vol. 59, 487-494
- **TAKAHASHI, Y. KAWAI ; S. SHIMADA.** Hot corrosion of cordierite/mullite composites by Na-salts. *Journal of the European ceramic society,* 2002, vol. 22, 1959-1969
- **NATHAN S. JACOBS ; KAANG N. LEE.** Corrosion of mullite by molten salts. *J. Am. Ceram. Soc.,* 1996, vol. 79 (8), 2161-67